# EUROPEAN PATENT SPECIFICATION

(11) **EP 4 057 608 B1**
(45) Date of publication and mention of the grant of the patent: **08.04.2026**
(21) Application number: 21217573.1
(22) Date of filing: 23.12.2021
(51) Int. Cl.: H04N 1/32

(54) **COMMUNICATION MANAGEMENT SYSTEM, COMMUNICATION MANAGEMENT APPARATUS, COMMUNICATION MANAGEMENT METHOD, DATA PROCESSING APPARATUS, AND CARRIER MEDIUM**
KOMMUNIKATIONSVERWALTUNGSSYSTEM, KOMMUNIKATIONSVERWALTUNGSVORRICHTUNG, KOMMUNIKATIONSVERWALTUNGSVERFAHREN, DATENVERARBEITUNGSVORRICHTUNG UND TRÄGERMEDIUM
SYSTÈME DE GESTION DE COMMUNICATION, APPAREIL DE GESTION DE COMMUNICATION, PROCÉDÉ DE GESTION DE COMMUNICATION, APPAREIL DE TRAITEMENT DE DONNÉES ET SUPPORT

(30) Priority: 10.03.2021 JP 2021037901
(43) Date of publication of application: 14.09.2022
(73) Proprietor: Ricoh Company, Ltd., Ohta-ku Tokyo 143-8555 (JP)
(72) Inventor: Okamoto, Takuya, Tokyo, 143-8555 (JP)
(74) Representative: Marks & Clerk LLP

(56) References cited:
- JP-A- 2011 199 462
- US-A1- 2012 257 249

## Description

### BACKGROUND

### Technical Field

The present disclosure relates to a communication management system, a communication management apparatus, a communication management method, a data processing apparatus, and a carrier medium.

### Related Art

In recent years, a technique has already been known in which, when a user of a transmission destination edits a document transmitted from a transmission source and returns the edited document to the transmission source, received transmission source information is automatically set as a destination so as to save an operation of inputting the destination of the transmission source performed by the user.

Further, there is known a technique in which "telephone number" included in a protocol signal transmitted from a transmission source is detected. For example, station number information, e.g., a called subscriber identification (CSID) transmitted from a transmission source is detected at the time of facsimile reception, the CSID is sequentially stored in a CSID storing unit in the order of detection. When a reply is designated by a reply key, an opposite station that has transmitted a document last is read from the CSID storing unit to call the opposite station. Such a technique is disclosed in Japanese Unexamined Patent Application Publication No.H08-336028, for example. However, in the conventional technique, the CSID (for example, reply destination information) transmitted from the transmission source may be manually input by the user, or a different number can be intentionally set thereto. There is a disadvantage that the information is not always accurate.

US-A-2012/257249 discloses a web-browser/web server method of signing documents, in particular faxes and email attachments.

JP-A-2011199462 discloses a way to automate the transfer of orders without carrying out character recognition. A facsimile order sheet from a customer is transferred to a supplier, and a reply facsimile sheet from the supplier is transferred to the customer. The actual facsimile numbers and the temporary facsimile numbers of the customer and the supplier are stored on a table. The actual facsimile number is determined as the transfer destination number from the table so that the destination facsimile number in the received facsimile sheet becomes the temporary facsimile number. The temporary facsimile number is determined as the transfer source number from the customer table or the supplier table so that the transmission source facsimile number in the received facsimile sheet becomes the actual facsimile number. The received sheet is transferred to the transfer destination number thus determined from the transfer source number.

### SUMMARY

The invention is set out in the appended set of claims.

Accordingly, the reply destination information when returning to the transmission source is provided as accurate information.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a diagram illustrating an example of an overall configuration of a communication system according to a first embodiment of the present disclosure;
FIG. 2 is a block diagram illustrating an example of a hardware configuration of a communication apparatus according to the first embodiment;
FIG. 3 is a block diagram illustrating an example of a hardware configuration of a data processing apparatus according to the first embodiment;
FIG. 4 is a block diagram illustrating an example of a hardware configuration of a communication terminal, a communication management apparatus, and a number search server according to the first embodiment;
FIG. 5 is a block diagram illustrating an example of a functional configuration of the communication system according to the first embodiment;
FIG. 6 is a block diagram illustrating an example of a functional configuration of the communication system according to the first embodiment;
FIG. 7A conceptually illustrates an example of a terminal information management table according to the first embodiment;
FIG. 7B conceptually illustrates an example of a transmission source information management table according to the first embodiment;
FIG. 8 is a conceptually illustrates an example of a received document management table according to the first embodiment;
FIG. 9 conceptually illustrates an example of a search result management table according to the first embodiment;
FIG. 10 is a sequence chart illustrating an example of application activation processing according to the first embodiment;
FIG. 11 is a sequence chart illustrating an example of data transmission and reception processing according to the first embodiment;
FIG. 12 is a flowchart illustrating an example of determination processing of a transmission source information according to the first embodiment;
FIG. 13 is a sequence chart illustrating an example of document information transmission and reception processing according to the first embodiment;
FIG. 14 is a sequence chart illustrating an example of number search processing according to the first embodiment;
FIG. 15 is a flowchart illustrating an example of registration and determination processing of a number search result according to the first embodiment;
FIG. 16 is a sequence chart illustrating an example of notification processing of the number search result according to the first embodiment;
FIG. 17 is a view illustrating an example of a display screen of reception information according to the first embodiment;
FIG. 18 is a view illustrating an example of a screen displaying reply destination information according to the first embodiment;
FIG. 19 is a view illustrating an example of another screen displaying reply destination information according to the first embodiment;
FIG. 20 is a view illustrating an example of a screen displaying a failure of a reply destination search according to the first embodiment;
FIG. 21 is a view illustrating an example of another screen displaying a failure of a reply destination search according to the first embodiment;
FIG. 22 is a diagram illustrating an example of an overall configuration of a communication system according to a second embodiment of the present disclosure;
FIG. 23 is a block diagram illustrating an example of a functional configuration of the communication system according to the second embodiment;
FIG. 24 conceptually illustrates an example of a search result management table according to the second embodiment;
FIG. 25 is a sequence chart illustrating an example of notification processing of a number search result according to the second embodiment;
FIG. 26 is a view illustrating an example of a screen displaying reply destination information according to the second embodiment; and
FIG. 27 is a diagram illustrating an example of an overall configuration of a communication system according to a variation of the second embodiment.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Below, embodiments of the present disclosure are described with reference to accompanying drawings. In the description of the drawings, the same elements are denoted by the same reference numerals, and redundant descriptions thereof are omitted.

### First Embodiment

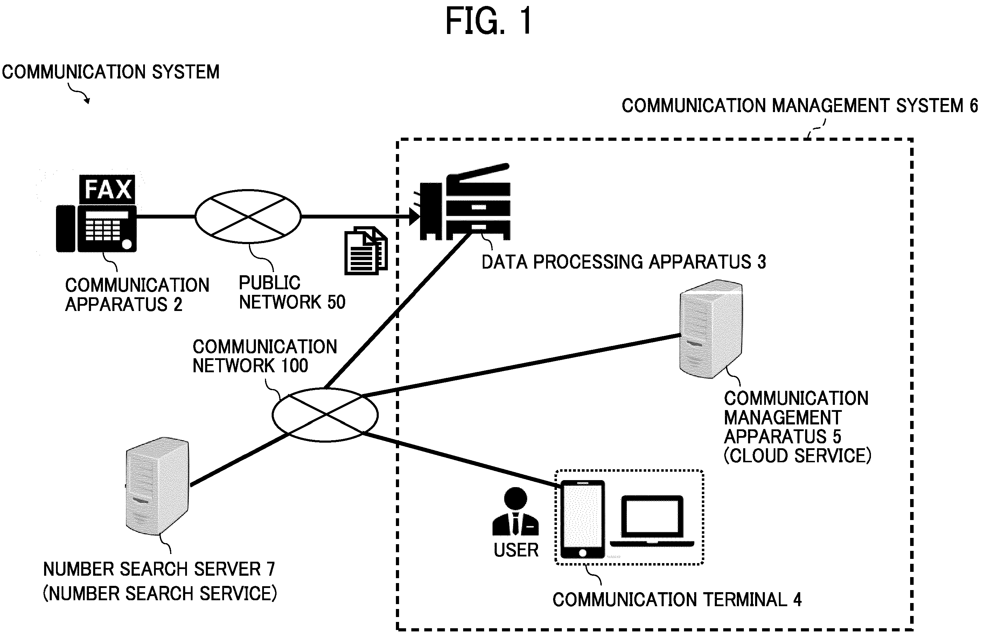

Referring now to FIGS. 1 to 21, a description is given of a first embodiment of the present disclosure.

### Overall Configuration of Communication System

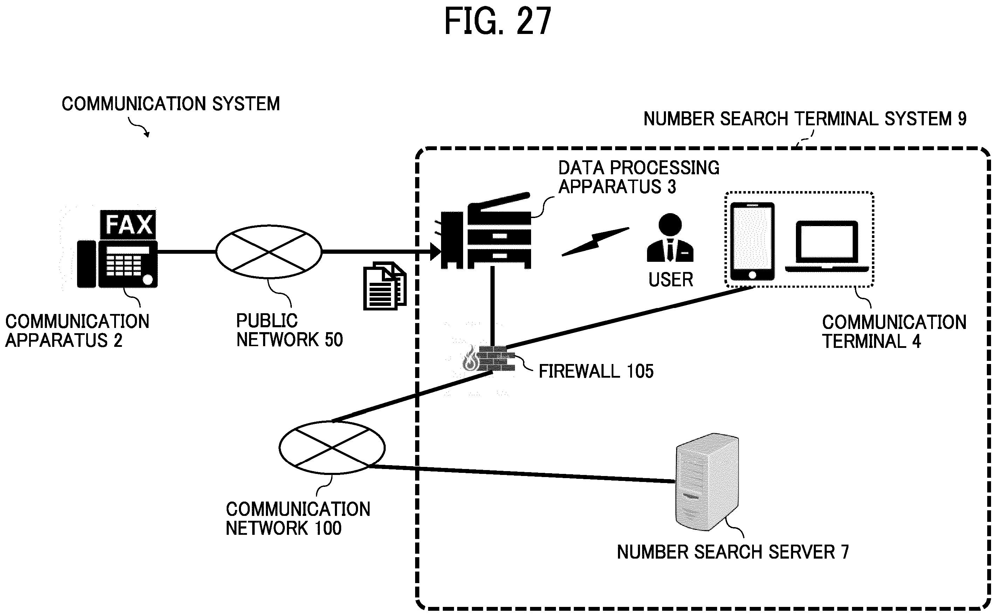

FIG. 1 is a diagram illustrating an example of an overall configuration of a communication system according to a first embodiment. As illustrated in FIG. 1, the communication system includes a communication apparatus 2, a data processing apparatus 3, a communication terminal 4, a communication management apparatus 5, and a number search server 7. Further, the data processing apparatus 3, the communication terminal 4, and the communication management apparatus 5 together function as a communication management system 6. The communication apparatus 2 and the data processing apparatus 3 are connected to each other via a public network 50 such as a telephone line or an integrated services digital network (ISDN). The data processing apparatus 3, the communication terminal 4, the communication management apparatus 5, and the number search server 7 are connected to one another via a communication network 100. The communication network 100 is implemented by, for example, the Internet, a mobile communication network, a local area network (LAN), or the like. The communication network 100 may include, in addition to a wired communication, a wireless communication in compliance with, for example, the third generation (3G), the fourth generation (4G), the fifth generation (5G), Worldwide Interoperability for Microwave Access (WiMAX), or Long Term Evolution (LTE). The data processing apparatus 3, the communication terminal 4, and the number search server 7 together function as a number search terminal system 9 (illustrated in FIG. 27) as a part of the communication system.

### Communication Apparatus

The communication apparatus 2 is, for example, a facsimile device. The communication apparatus 2 transmits and receives data, documents, and various types of information through a facsimile communication using the telephone line or the ISDN, which is an example of the public network 50. Note that the communication apparatus 2 may be, instead of the facsimile device, an image forming apparatus having a facsimile communication function (multifunction peripheral/product/printer, which is a so-called MFP).

### Data Processing Apparatus

An example of the data processing apparatus 3 is an MFP having a facsimile communication function. The data processing apparatus 3 has a function of receiving data such as a facsimile document (facsimile data) transmitted by the communication apparatus 2, performing predetermined processing to transfer (transmit) the data to the communication management apparatus 5, and returning (transmitting) the data to the communication apparatus 2. The predetermined processing is, for example, defined by a manufacturer. The data processing apparatus 3 may simply be a facsimile device instead of the MFP.

### Communication Terminal

The communication terminal 4 is implemented by an information processing apparatus (computer system) installed with a general-purpose operating system (OS). The communication terminal 4 receives, from the communication management apparatus 5 via the communication network 100, a predetermined notification based on various data (information) received by the data processing apparatus 3 and various other data. The predetermined notification is, for example, defined by a manufacturer. The communication terminal 4 may be, for example, a communication terminal having a communication function such as a smartphone, a tablet terminal, a personal digital assistant (PDA), or a wearable personal computer (PC) of sunglasses type or wristwatch type. Further, the communication terminal 4 may be a general-purpose computer (PC). In other words, any terminal capable of executing software such as browser software may be used as the communication terminal 4.

### Communication Management Apparatus

The communication management apparatus 5 is implemented by an information processing apparatus (computer system) installed with a general-purpose OS and having a server function. The communication management apparatus 5 can communicate with each of the data processing apparatus 3, the communication terminal 4, and the number search server 7. Further, the communication management apparatus 5 manages data received by the data processing apparatus 3, and exchanges various data (information) with the communication terminal 4 and the number search server 7. Note that the communication management apparatus 5 may be a general-purpose PC.

### Number Search Server

The number search server 7 stores reply destination information corresponding to a telephone number, a facsimile number, or the like requested by the communication management apparatus 5 and provides the communication management apparatus 5 with the reply destination information. The reply destination information includes various numbers, a name of a company or an organization owning each of the various numbers, and other information. In addition, the number search server 7 is a server that executes a number search service that is publicly available at no charge. Therefore, the number search service provided by the number search server 7 is not limited to one, and a plurality of number search services may be provided. In the present embodiment, the number search server 7 functions as an example of a search server.

### Terms

In the present embodiment, hereinafter, data and information transmitted and received between a facsimile device as an example of the communication apparatus 2 and the data processing apparatus 3, and data and information transmitted and received between the data processing apparatus 3 and the communication management apparatus 5 are described using a term "facsimile document". The facsimile data included in the facsimile document includes, for example, data representing texts such as characters and data representing images such as photographs, paintings, and drawings.

### Hardware Configuration

### Hardware Configuration of Communication Apparatus

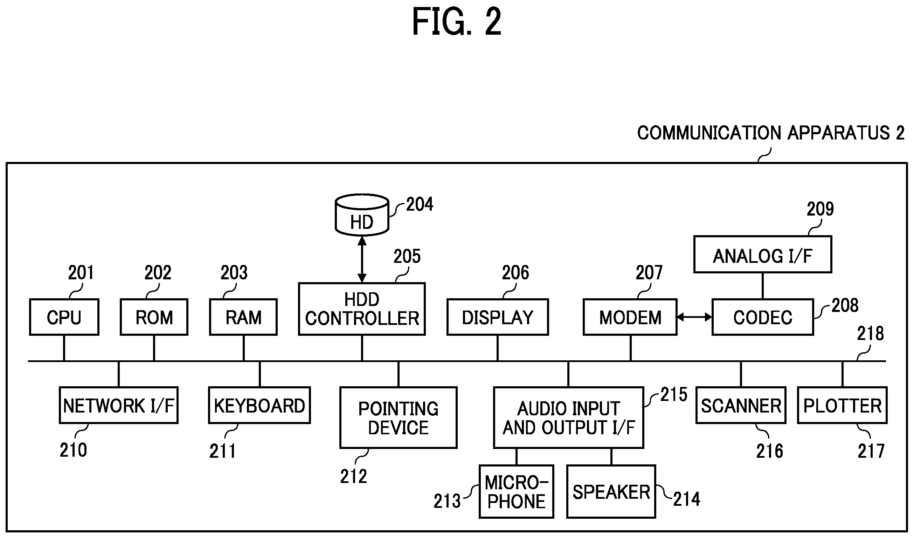

FIG. 2 is a block diagram illustrating an example of a hardware configuration of a communication apparatus according to the first embodiment. The communication apparatus 2 is, for example, a facsimile device. As illustrated in FIG. 2, the communication apparatus 2 includes hardware resources including a central processing unit (CPU) 201, a read only memory (ROM) 202, a random access memory (RAM) 203, a hard disk (HD) 204, a hard disk drive (HDD) controller 205, a display 206, a modem 207, a codec 208, an analog interface (I/F) 209, a network I/F 210, a keyboard 211, a pointing device 212, a microphone 213, a speaker 214, an audio input and output I/F 215, a scanner 216, a plotter 217 and a bus line 218.

The CPU 201 controls entire operation of the communication apparatus 2. The ROM 202 stores a program to boot the CPU 201. The RAM 203 is used as a work area for the CPU 201. The HD 204 stores various data such as a control program. The HDD controller 205 controls reading and writing of various data from and to the HD 204 under control of the CPU 201. The display 206 is an example of a display device (display means) that displays various types of information such as a cursor, a menu, a window, characters, a virtual numeric keypad, an execution key, and an image. The modem 207 converts an analog signal received via the public network 50 into a digital signal for performing various types of processing in the communication apparatus 2. Further, the modem 207 has a function of converting the digital signal processed in the communication apparatus 2 into the analog signal for transmission via the public network 50. The analog I/F 209 is an interface connected to the public network 50 for the analog signal. The codec 208 is a hardware resource disposed between the modem 207 and the analog I/F 209, and is a device that bidirectionally performs encoding and decoding of data using an encoding method. The bus line 218 is, for example, an address bus, a data bus, or the like, which electrically connects each component illustrated in FIG. 2, such as the CPU 201.

The network I/F 210 is an interface for performing data communication using the communication network 100. The keyboard 211 is an example of an input device (input means) provided with a plurality of keys that allows a user to input characters, numerals, and various instructions. The pointing device 212 is an example of an input device (input means) that allows a user to select or execute various instructions, select an object for processing, and move a cursor being displayed. Note that the input device (input means) is not limited to the keyboard 211 or the pointing device 212, and may be a touch panel, a voice input device, or the like. The microphone 213 is an example of a sound collecting device (sound collecting means) that collects voice and ambient sound (audio signal). The speaker 214 is an example of a sound output device (sound output means) that outputs an output sound signal obtained by converting an input sound signal. The audio input and output I/F 215 is a circuit that processes an input and an output of a sound signal between the microphone 213 and the speaker 214 under control of the CPU 201. The scanner 216 is an example of a reading device (reading means) that reads a document such as text or an image to be transmitted to a transmission destination device and is a hardware resource constructed of a reading element such as a charge coupled device (CCD) image sensor. The plotter 217 is an example of a printing device (printing means) that prints a document transmitted from a device of a transmission source on thermal paper, plain paper, or the like.

### Hardware Configuration of Data Processing Apparatus

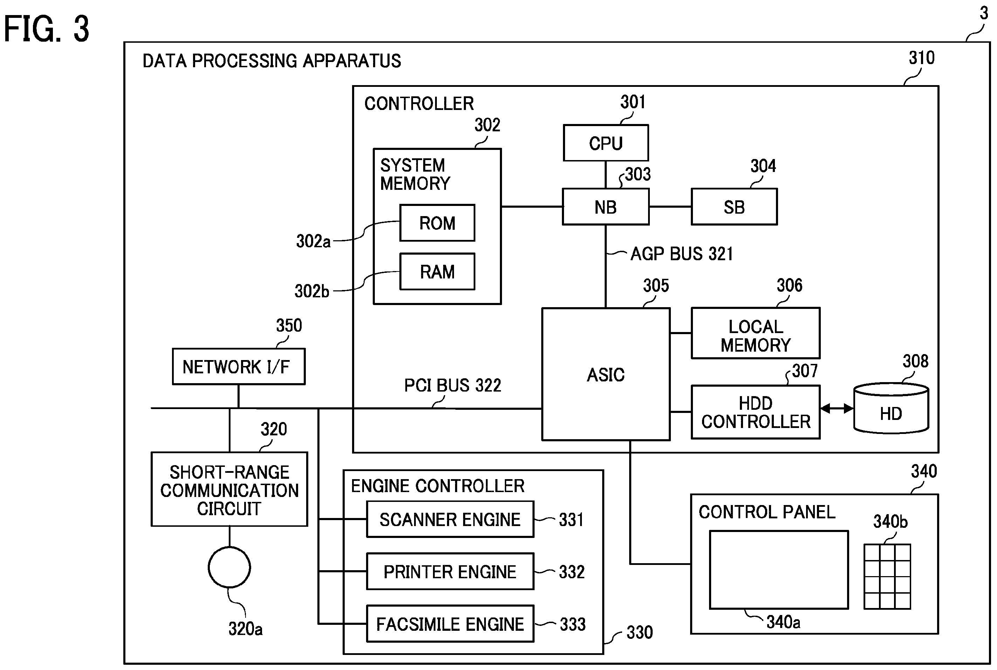

FIG. 3 is a block diagram illustrating an example of a hardware configuration of a data processing apparatus according to the first embodiment. The data processing apparatus 3 is, for example, an MFP, and includes hardware resources including a controller 310, a short-range communication circuit 320, an engine controller 330, a control panel 340, and a network I/F 350 as illustrated in FIG. 3.

The controller 310 includes a CPU 301 as a main processor of a computer, a system memory 302, a north bridge (NB) 303, a south bridge (SB) 304, an application specific integrated circuit (ASIC) 305, a local memory 306 as a storage area, an HDD controller 307, and an HD 308 as a storage area. The NB 303 and the ASIC 305 are connected through an accelerated graphics port (AGP) bus 321.

The CPU 301 is a processor that controls entire operation of the data processing apparatus 3. The NB 303 is a bridge for connecting the CPU 301 with the system memory 302, the SB 304, and the AGP bus 321. The NB 303 includes a memory controller for controlling reading and writing of various data with respect to the system memory 302, a peripheral component interconnect (PCI) master, and an AGP target.

The system memory 302 includes a ROM 302a as a memory that stores a program and data for implementing various functions of the controller 310. The system memory 302 further includes a RAM 302b as a memory that deploys the program and data, or as a drawing memory that stores drawing data for printing. The program stored in the RAM 302b may be stored in any computer-readable storage medium, such as a compact disc-read only memory (CD-ROM), a compact disc-recordable (CD-R), or a digital versatile disc (DVD), in a file format installable or executable by a computer, for distribution.

The SB 304 is a bridge for connecting the NB 303 to PCI devices and peripheral devices. The ASIC 305 is an integrated circuit (IC) for image processing applications including hardware elements for image processing and has a role of a bridge connecting the AGP bus 321, a PCI bus 322, the HD 308, and the local memory 306 one another. The ASIC 305 includes a PCI target, an AGP master, an arbiter, a memory controller to control the local memory 306, a plurality of direct memory access controllers (DMACs), and a PCI unit. The arbiter arbitrates a drive timing of individual signal according to a fixed priority in the ASIC 305. The DMACs rotate image data by converting coordinates of the image data with, for example, a hardware logic. The PCI unit transfers data between a scanner engine 331 and a printer engine 332 via the PCI bus 322. The ASIC 305 can be configured to connect to a universal serial bus (USB) interface, the Institute of Electrical and Electronics Engineers 1394 (IEEE1394) interface, or both.

The local memory 306 is a memory used as a buffer for image data to be copied or a code buffer. The HD 308 is a storage for storing image data, font data used during printing, and forms. The HDD controller 307 controls reading and writing of data from and to the HD 308 under control of the CPU 301. The AGP bus 321 is a bus interface for a graphics accelerator card, which has been proposed to accelerate graphics processing. Through directly accessing the system memory 302 by high-throughput, speed of the graphics accelerator card is improved.

The short-range communication circuit 320 includes a short-range communication antenna 320a. The short-range communication circuit 320 is a communication circuit in compliance with the near field communication (NFC), BLUETOOTH, WIRELESS FIDELITY (WI-FI), or the like.

The engine controller 330 includes the scanner engine 331, the printer engine 332, and a facsimile engine 333. The control panel 340 includes a panel display 340a and an operation panel 340b. The panel display 340a is, for example, a touch panel that displays current settings or a selection screen and receives a user input. The operation panel 340b includes, for example, a numeric keypad and a start key. The numeric keypad receives assigned values of image forming parameters such as an image density parameter. The start key receives an instruction to start copying, for example. The controller 310 controls entire operation of the data processing apparatus 3. For example, the controller 310 controls rendering, communication, or user inputs to the control panel 340. The scanner engine 331 and the printer engine 332 each perform various image processing, such as error diffusion or gamma conversion. The facsimile engine 333 includes an analog I/F for performing facsimile communication using an analog line (the public network 50) connected to the communication apparatus 2, a modem, a speaker, or the like.

Note that, in response to an instruction to select a specific application through the control panel 340 by use of, for example, an application (or mode) switch key, the data processing apparatus 3 selectively performs document server function, copying function, printing function, and facsimile communication function. When the document server function is selected, an operation mode switches to a document box mode. With selection of the copying function, the operation mode switches to a copy mode. With selection of the printing function, the operation mode switches to a printer mode. With selection of the facsimile communication function, the operation mode switches to a facsimile mode.

The network I/F 350 is an interface for performing data communication using the communication network 100. The short-range communication circuit 320 and the network I/F 350 are electrically connected to the ASIC 305 via the PCI bus 322. Note that the data processing apparatus 3 is not limited to the above-described MFP as long as an apparatus has a configuration configured to perform facsimile communication.

Hardware Configuration of Communication Terminal, Communication Management Apparatus, and Number Search Server

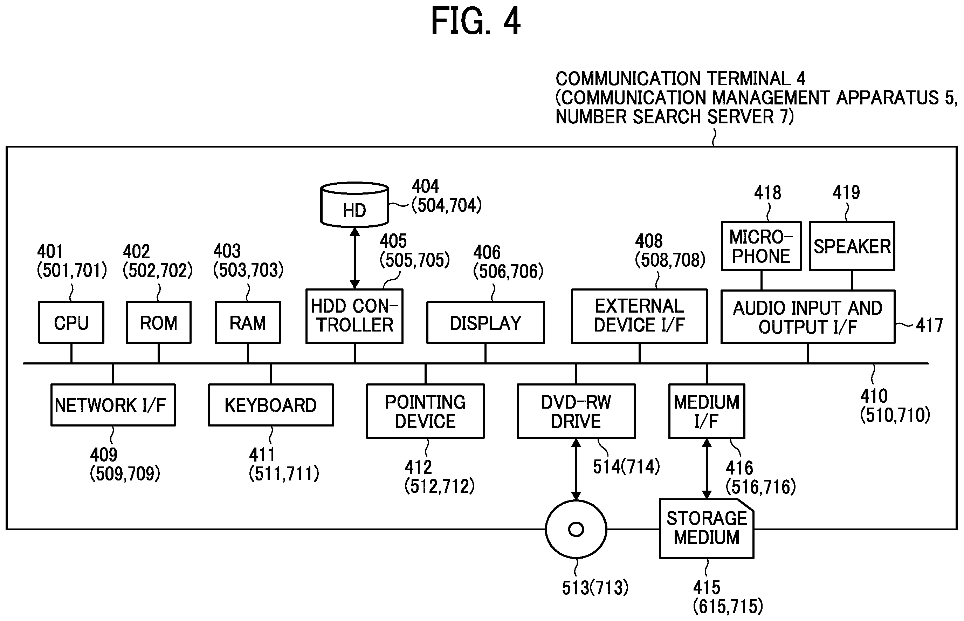

FIG. 4 is a block diagram illustrating an example of a hardware configuration of the communication terminal, the communication management apparatus, and the number search server according to the first embodiment. The communication terminal 4 is implemented by one or more computers. As illustrated in FIG. 4, the communication terminal 4 includes hardware resources including a CPU 401, a ROM 402, a RAM 403, an HD 404, an HDD controller 405, a display 406, an external device I/F 408, a network I/F 409, a bus line 410, a keyboard 411, a pointing device 412, a medium I/F 416, an audio input and output I/F 417, a microphone 418, a speaker 419, and a sensor 420.

The CPU 401 controls entire operation of the communication terminal 4. The ROM 402 stores a program to boot the CPU 401. The RAM 403 is used as a work area for the CPU 401. The HD 404 stores various data such as a control program. The HDD controller 405 controls reading and writing of various data from and to the HD 404 under control of the CPU 401. The display 406 is an example of a display device (display means) that displays various types of information such as a cursor, a menu, a window, characters, a virtual numeric keypad, an execution key, and an image. In one example, the display 406 is a touch panel display provided with an input device (input means). The external device I/F 408 is an interface for connection with various external devices. Examples of the external devices include, but are not limited, a USB memory and a USB device. The network I/F 409 is an interface for performing data communication using the communication network 100. The bus line 410 is, for example, an address bus, a data bus, or the like, which electrically connects each component illustrated in FIG. 4, such as the CPU 401.

The keyboard 411 is an example of an input device including a plurality of keys for inputting characters, numerical values, various instructions, and the like. The pointing device 412 is an example of an input device (input means) that allows a user to select or execute various instructions, select an object for processing, and move a cursor being displayed. Note that the input device (input means) is not limited to the keyboard 411 or the pointing device 412, and may be a touch panel, a voice input device, or the like. The medium I/F 416 controls reading and writing (storing) of various data from and to a storage medium 415 such as a flash memory. The microphone 418 is an example of a built-in sound collecting (sound collecting means) device for inputting audio (audio signal). The speaker 419 is an example of a sound output device (sound output means) for outputting audio (audio signal). The audio input and output I/F 417 is a circuit for inputting and outputting an audio signal between the microphone 418 and the speaker 419 under control of the CPU 401. In one example, when the communication terminal 4 is a general-purpose PC, the communication terminal 4 includes a hardware resource corresponding to a digital versatile disk rewritable (DVD-RW) drive 514 of the communication management apparatus 5.

The communication management apparatus 5 is implemented by one or more computers. Of these hardware resources, as illustrated in FIG. 4, a CPU 501 to a pointing device 512 and a medium I/F 516 have the same or substantially the same configuration as the hardware resources of the CPU 401 to the pointing device 412 and the medium I/F 416 of the communication terminal 4, and the redundant detailed descriptions thereof are omitted below. The DVD-RW drive 514 controls reading and writing of various data from and to a DVD-RW 513, which is an example of a removable storage medium. The removable storage medium is not limited to a DVD-RW and may be a digital versatile disk recordable (DVD-R), a BLU-RAY disc, or the like.

The number search server 7 is implemented by one or more computers. Of these hardware resources, as illustrated in FIG. 4, a CPU 701 to an external device I/F 708 and a network I/F 709 to a medium I/F 716 have the same or substantially the same configuration as the hardware resources of the CPU 501 to the external device I/F 508 and the network I/F 509 to the medium I/F 516 of the communication management apparatus 5, and the redundant detailed descriptions thereof are omitted below.

The computer in FIG. 4 is one example of the communication terminal 4. Examples thereof include a head up display (HUD) device, an industrial machine, a network home appliance, a mobile phone, a smartphone, a tablet terminal, a game console, and a personal digital assistant (PDA).

Further, any one of the above-described control programs may be recorded in a file in a format installable or executable on a computer-readable recording medium or be downloaded through a network for distribution. Examples of the recording medium include a CD-R, a DVD, a BLU-RAY disc, a secure digital (SD) card, and a USB memory. In addition, the recording medium may be domestically or internationally provided as a program product. For example, the communication management apparatus 5 implements a communication management method according to the present disclosure by executing a program according to the present disclosure.

### Functional Configuration of Communication System

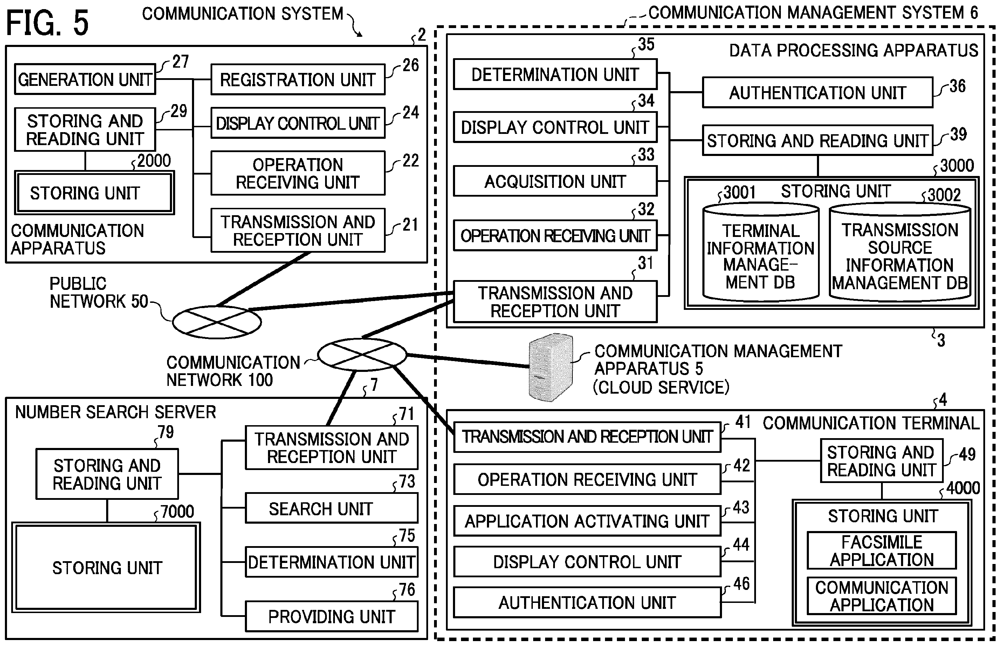

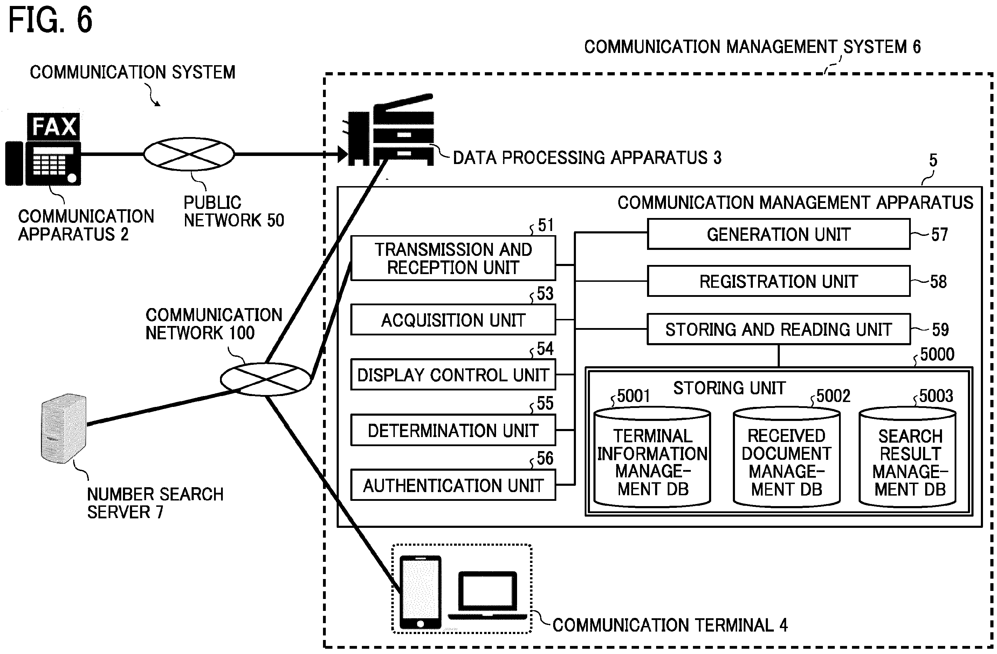

Referring now to FIGS. 5 to 9, a description is given of a functional configuration of the first embodiment. FIGS. 5 and 6 are block diagrams illustrating an example of a functional configuration of the communication system according to the first embodiment.

### Functional Configuration of Communication Apparatus

As illustrated in FIG. 5, the communication apparatus 2 includes a transmission and reception unit 21, an operation receiving unit 22, a display control unit 24, a registration unit 26, a generation unit 27, and a storing and reading unit 29. Each of the functional units is a function or means implemented by one or more of the hardware resources illustrated in FIG. 2. The one or more of the hardware resources operate in response to an instruction from the CPU 201 according to a program for the communication apparatus 2 loaded from at least one of the ROM 202 and the HD 204 into the RAM 203. The communication apparatus 2 further includes a storing unit 2000 that is implemented by at least one of the ROM 202 and the HD 204 illustrated in FIG. 2.

### Each Functional Unit of Communication Apparatus

A description is now given of each of the functional units of the communication apparatus 2 in detail. The transmission and reception unit 21 of the communication apparatus 2 illustrated in FIG. 5 is mainly implemented by processing performed by the CPU 201 with respect to the analog I/F 209 illustrated in FIG. 2. The transmission and reception unit 21 transmits and receives various data included in a facsimile document to and from the data processing apparatus 3 via the public network 50. In the present embodiment, the transmission and reception unit 21 functions as an example of transmission means and reception means.

The operation receiving unit 22 is mainly implemented by the CPU 201 processing signals generated by various operations received by the keyboard 211 and the pointing device 232 illustrated in FIG. 2. The operation receiving unit 22 receives, from a user, various operations with respect to facsimile document transmission and reception. In the present embodiment, the operation receiving unit 22 functions as an example of operation receiving means.

The display control unit 24 is mainly implemented by processing performed by the CPU 201 with respect to the display 206 illustrated in FIG. 2. The display control unit 24 performs display control of various data (information) on the display 206. In the present embodiment, the display control unit 24 functions as an example of display control means.

The registration unit 26 is mainly implemented by processing of the CPU 201 illustrated in FIG. 2 and registers a destination and the like of a document transmitted to the data processing apparatus 3. In the present embodiment, the registration unit 26 functions as an example of registration means.

The generation unit 27 is mainly implemented by processing of the CPU 201 illustrated in FIG. 2 and generates a document and the like to be transmitted to the data processing apparatus 3. In the present embodiment, the generation unit 27 functions as an example of generation means.

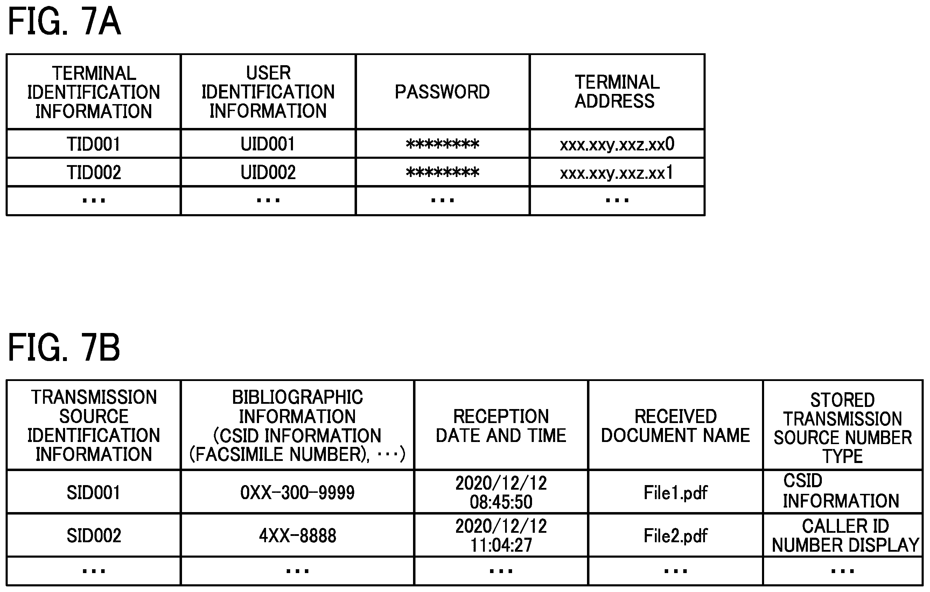

The storing and reading unit 29 is mainly implemented by processing of the CPU 201 illustrated in FIG. 7. The storing and reading unit 29 stores various data (or information) in the storing unit 2000 and reads various data (or information) from the storing unit 2000. In the present embodiment, the storing and reading unit 29 functions as an example of storing and reading means.

### Functional Configuration of Data Processing Apparatus

As illustrated in FIG. 6, the data processing apparatus 3 includes a transmission and reception unit 31, an operation receiving unit 32, an acquisition unit 33, a display control unit 34, a determination unit 35, an authentication unit 36, and a storing and reading unit 39. Each of the functional units is a function or means implemented by one or more of the hardware resources illustrated in FIG. 3. The one or more of the hardware resources operate in response to an instruction from the CPU 301 according to a program for the data processing apparatus 3 loaded from at least one of the ROM 302a and the HD 308 into the RAM 302b. The data processing apparatus 3 further includes a storing unit 3000 that is implemented by at least one of the ROM 302a and the HD 308 illustrated in FIG. 3. In the storing unit 3000, a data processing program to be executed by the data processing apparatus 3 is stored.

### Terminal Information Management Table

FIG. 7A conceptually illustrates an example of a terminal information management table according to the first embodiment. The storing unit 3000 stores a terminal information management DB 3001, for example, in the form of the terminal information management table as illustrated in FIG. 7A. In the terminal information management table, user identification information, a password, and a terminal address are stored in association with one another for each piece of terminal identification information. The terminal identification information is information for identifying the communication terminal 4 owned by a user, and is, for example, "TID001," "TID002," or the like.

The user identification information is identification information for identifying a user who uses the communication terminal 4, and is, for example, "UID001," "UID002," or the like. The password is predetermined code information associated with the user identification information and is constructed of alphabetic characters, numerals, various symbols, and the like. The predetermined code is, for example, determined by the user or a manufacturer. The user logs in to the data processing apparatus 3 using the terminal identification information and the password. The user can use the communication terminal 4 as an operation unit to operate the data processing apparatus 3 by activating a dedicated application.

The terminal address indicates an address of the communication terminal 4, and is, for example, an internet protocol (IP) address. The IP address is represented by an Internet Protocol version 4 (IPv4) address, an Internet Protocol version 6 (IPv6) address or the like.

### Transmission Source Information Management Table

FIG. 7B conceptually illustrates an example of a transmission source information management table according to the first embodiment. The storing unit 3000 stores a transmission source information management DB 3002, for example, in the form of the transmission source information management table as illustrated in FIG. 7B. The transmission source information management table stores bibliographic information, a reception date and time, a received document name, and a stored transmission source number type in association with one another for each piece of transmission source identification information. The transmission source identification information is information for identifying the communication apparatus 2 that is a transmission source, and is, for example, "SID001," "SID002," or the like.

The bibliographic information includes various types of information in facsimile communication executed between the communication apparatus 2 and the data processing apparatus 3. The bibliographic information includes transmission source information, for example, a called subscriber identification (CSID), a receiver terminal identification (RTI), or the like. The CSID indicates transmission source number such as a facsimile number of a transmission source (the communication apparatus 2) transmitted from the transmission source according to a standard protocol in facsimile communication. The RTI indicates transmission source information transmitted from the communication apparatus 2 according to a non-standard protocol in facsimile communication. The bibliographic information may include the number of pages of a received document, an image size, and the like. In the present embodiment, a specific example of transmission source information is simply referred to as CSID. In addition, the CSID may be given in a state in which an area code is omitted, such as "4XX-8888" illustrated in FIG. 7B.

The reception date and time indicates a date and time when the data processing apparatus 3 receives a facsimile document transmitted from the communication apparatus 2. A communication time is a time period of facsimile communication performed by the communication apparatus 2 with the data processing apparatus 3. The communication time may be provided from the communication apparatus 2 or calculated from clock information in the data processing apparatus 3.

The received document name is a document name indicating a document transmitted from the communication apparatus 2 to the data processing apparatus 3 and included in header information transmitted from the communication apparatus 2. Alternatively, the data processing apparatus 3 may store the received document file with an arbitrary name based on text information obtained by OCR or the like of the received document file.

The stored transmission source number type is information indicating the type of the transmission source number held in the transmission source information management DB 3002 of the data processing apparatus 3 in reception of facsimile communication. The stored transmission source number type indicates the type by which the transmission source number is acquired and includes, for example, CSID and caller identification (ID) display.

### Functional Unit of Data Processing Apparatus

A description is now given of the functional units of the data processing apparatus 3 in detail. The transmission and reception unit 31 of the data processing apparatus 3 illustrated in FIG. 6 is mainly implemented by processing performed by the CPU 301 with respect to the network I/F 350 illustrated in FIG. 3. The transmission and reception unit 31 transmits and receives various data (or information) to and from the communication apparatus 2 and the communication management apparatus 5 via the communication network 100. In the present embodiment, the transmission and reception unit 31 functions as an example of transmission means and reception means.

The operation receiving unit 32 is mainly implemented by the CPU 301 processing signals generated by various operations input to the operation panel 340b of the control panel 340 illustrated in FIG. 3. The operation receiving unit 32 receives an input operation of a destination or the like performed by a user at a time of reply or transfer of a received document in facsimile communication. In the present embodiment, the operation receiving unit 32 functions as an example of operation receiving means.

The acquisition unit 33 is mainly implemented by processing of the CPU 301 illustrated in FIG. 3 and acquires bibliographic information and the like included in a received document received from the communication apparatus 2. In the present embodiment, the acquisition unit 33 functions as an example of acquisition means.

The display control unit 34 is mainly implemented by processing performed by the CPU 301 with respect to the panel display 340a of the control panel 340 illustrated in FIG. 3. The display control unit 34 controls the control panel 340 to display various types of information, such as a subject, a destination, and a transmission and reception time, related to a facsimile document transmitted from the communication apparatus 2. In the present embodiment, the display control unit 34 functions as an example of display control means.

The determination unit 35 is mainly implemented by processing of the CPU 301 illustrated in FIG. 3 and performs various determinations in the data processing apparatus 3. In the present embodiment, the determination unit 35 functions as an example of determination means.

The authentication unit 36 is mainly implemented by processing performed by the CPU 301 with respect to the panel display 340a of the control panel 340 illustrated in FIG. 3. The authentication unit 36 performs login authentication processing for login processing (request) performed by a user or the communication terminal 4 owned by the user with respect to the data processing apparatus 3. In the present embodiment, the authentication unit 36 functions as an example of authentication means.

The storing and reading unit 39 is mainly implemented by processing performed by the CPU 301 with respect to at least one of the ROM 302a and the HD 308 illustrated in FIG. 3. The storing and reading unit 39 stores various data (or information) in the storing unit 3000 and reads various data (or information) from the storing unit 5000. In the present embodiment, the storing and reading unit 39 functions as an example of storing and reading means.

### Functional Configuration of Communication Terminal

As illustrated in FIG. 5, the communication terminal 4 includes a transmission and reception unit 41, an operation receiving unit 42, an application activating unit 43, a display control unit 44, an authentication unit 46, and a storing and reading unit 49. Each of the functional units is a function or means implemented by one or more of the hardware resources illustrated in FIG. 4. The one or more of the hardware resources operate in response to an instruction from the CPU 401 according to a program for the communication terminal 4 loaded from at least one of the ROM 402 and the HD 404 into the RAM 403. The communication terminal 4 further includes a storing unit 4000 implemented by the ROM 402 or the HD 404 illustrated in FIG. 4. The storing unit 4000 stores a communication processing program to be executed by the communication terminal 4. The storing unit 4000 further stores a facsimile application for communicating with the communication apparatus 2 and a communication application for communicating with the communication management apparatus 5.

### Functional Unit of Communication Terminal

A description is now given of the functional units of the communication terminal 4 in detail. The transmission and reception unit 41 of the communication terminal 4 illustrated in FIG. 5 is mainly implemented by processing performed by the CPU 401 with respect to the external device I/F 408 and the network I/F 409 illustrated in FIG. 4. The transmission and reception unit 41 transmits and receives various data (or information) to and from the communication management apparatus 5 via the communication network 100. In the present embodiment, the transmission and reception unit 41 functions as an example of transmission means and reception means.

The operation receiving unit 42 is mainly implemented by the CPU 401 processing signals generated by various operations input to the keyboard 411 and the pointing device 412 illustrated in FIG. 4. The operation receiving unit 42 receives various operations and an input for selection from a user. The operation receiving unit 42 may use not only the keyboard 411 and the pointing device 412 but also an operation button to be pressed or having a user interface (UI) to be tapped is used as another input device (input means). In the present embodiment, the operation receiving unit 42 functions as an example of an operation receiving means.

The application activating unit 43 is mainly implemented by processing of the CPU 401 illustrated in FIG. 4 and activates each application for communicating with the data processing apparatus 3 and the communication management apparatus 5. In the present embodiment, the application activating unit 43 functions as an example of activating means.

The display control unit 44 is mainly implemented by processing performed by the CPU 401 with respect to the display 406 illustrated in FIG. 4. The display control unit 44 controls the display 406 to display various images, characters, code information, or the like. In the present embodiment, the display control unit 44 functions as an example of display control means.

The authentication unit 46 is mainly implemented by processing performed by the CPU 401 with respect to the display 406 illustrated in FIG. 4. The authentication unit 46 performs login processing (request) by being input user identification information and a predetermined password, for example, when a user using the communication terminal 4 requests authentication on the data processing apparatus 3 and the communication management apparatus 5.

The storing and reading unit 49 is mainly implemented by processing of the CPU 401 with respect to at least one of the ROM 402 and the HD 404 illustrated in FIG. 4. The storing and reading unit 49 stores various data (or information) in the storing unit 4000 and reads various data (or information) from the storing unit 4000. In the present embodiment, the storing and reading unit 49 functions as an example of storing and reading means.

### Functional Configuration of Communication Management Apparatus

As illustrated in FIG. 6, the communication management apparatus 5 includes a transmission and reception unit 51, an acquisition unit 53, a display control unit 54, a determination unit 55, an authentication unit 56, a generation unit 57, a registration unit 58, and a storing and reading unit 59. Each of the functional units is a function or means implemented by one or more of the hardware resources illustrated in FIG. 4. The one or more of the hardware resources operate in response to an instruction from the CPU 501 according to a program for the communication management apparatus 5 loaded from at least one of the ROM 502 and the HD 504 into the RAM 503. The communication management apparatus 5 further includes a storing unit 5000 that is implemented by the ROM 502 or the HD 504 illustrated in FIG. 4.

### Terminal Information Management Table

FIG. 7A conceptually illustrates an example of a terminal information management table according to the first embodiment. The storing unit 5000 stores a terminal information management DB 5001, for example, in the form of the terminal information management table as illustrated in FIG. 7A. In the terminal information management table, user identification information, a password, and a terminal address are stored in association with one another for each piece of terminal identification information. The terminal identification information is information for identifying the communication terminal 4 owned by a user, and is, for example, "TID001," "TID002," or the like.

The user identification information is identification information for identifying a user who uses the communication terminal 4, and is given by, for example, "UID001," "UID002," or the like. The password is predetermined code information associated with the user identification information and is constructed of alphabetic characters, numerals, various symbols, and the like. The predetermined code is, for example, determined by the user or a manufacturer. The user logs in to the communication management apparatus 5 using the terminal identification information and the password. The user can, by activating a dedicated application, use the communication terminal 4 owned by the user as an operation unit to acquire various types of information managed by the communication management apparatus 5.

The terminal address indicates an address of the communication terminal 4, and is, for example, an IP address. The IP address is represented by an IPv4 address, an IPv6 address or the like.

### Received Document Management Table

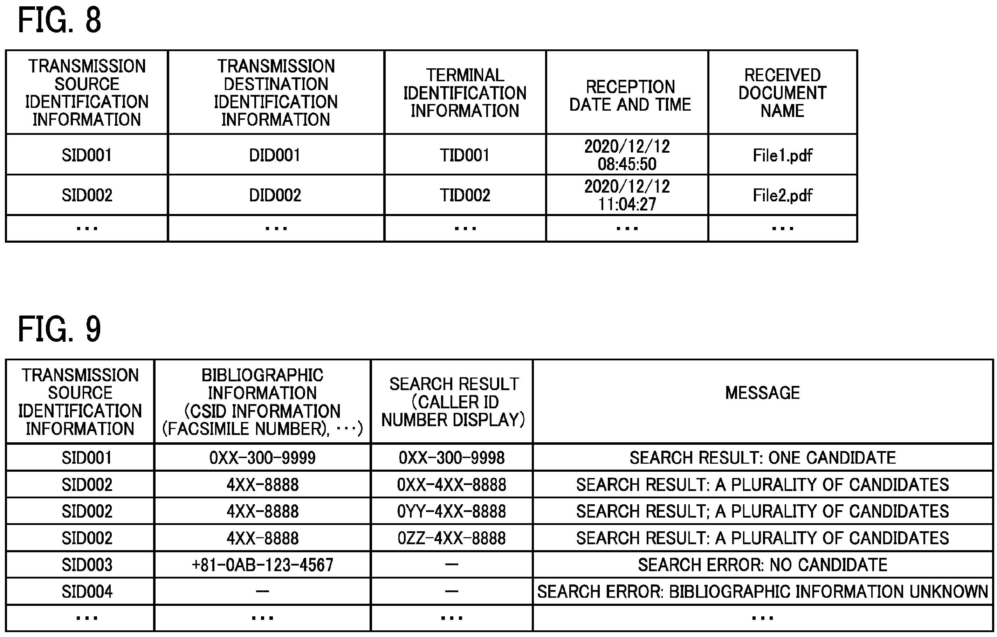

FIG. 8 conceptually illustrates an example of a received document management table according to the first embodiment. In the storing unit 5000, a received document management DB 5002 storing the received document management table as illustrated in FIG. 8 is implemented. In the received document management table, transmission destination identification information, a reception date and time, and a received document name are stored and managed in association with one another for each piece of transmission source identification information. The transmission destination identification information is information for identifying the data processing apparatus that is a transmission destination, and is, for example, "DID001," "DID002," or the like. The reception date and time indicates a date and time when data and information included in a facsimile document transmitted by the communication apparatus 2 are received. The received document name represents a file name of a facsimile document transmitted by the communication apparatus 2 and is, for example, "File001.pdf," "File002.pdf," or the like.

### Search Result Management Table

FIG. 9 conceptually illustrates an example of a search result management table according to the first embodiment. The storing unit 5000 stores a search result management DB 5003, for example, in the form of the search result management table as illustrated in FIG. 9. In the search result management table, bibliographic information (CSID and the like), a search result (number indicated by caller ID display, hereinafter "caller ID display number"), and a message are stored for each piece of transmission source identification information. The bibliographic information includes the CSID included in the facsimile document transmitted by the communication apparatus 2. The search result (caller ID display number) is a result of search performed by the number search server 7 based on the CSID included in the bibliographic information. The caller ID display number in the search result is one piece of the reply destination information. The message is a predetermined message corresponding to a search result in execution of a search performed by the number search server 7. The message includes the number of search results, success or failure of the search, and the like. The predetermined message is, for example, determined by the user or a manufacturer.

### Functional Unit of Communication Management Apparatus

A description is now given of the functional units of the communication management apparatus 5 in detail. The transmission and reception unit 51 of the communication management apparatus 5 illustrated in FIG. 6 is mainly implemented by processing performed by the CPU 501 with respect to the external device I/F 508 and the network I/F 509 illustrated in FIG. 4. The transmission and reception unit 51 transmits and receives various data (or information) to and from the data processing apparatus 3, the communication terminal 4, and the number search server 7 via the communication network 100. In the present embodiment, the transmission and reception unit 51 functions as an example of transmission means and reception means.

The acquisition unit 53 is mainly implemented by processing of the CPU 501 illustrated in FIG. 4 and acquires processing information, a document file, and the like included in a facsimile document transmitted by the communication apparatus 2. In the present embodiment, the acquisition unit 53 functions as an example of acquisition means.

The display control unit 54 is mainly implemented by processing performed by the CPU 501 with respect to the display 506 illustrated in FIG. 4. The display control unit 54 performs display control of a processing state and the like in various types of processing performed by the communication management apparatus 5. In the present embodiment, the display control unit 54 functions as an example of display control means.

The determination unit 55 is mainly implemented by processing of the CPU 501 illustrated in FIG. 4 and performs various determinations in the communication management apparatus 5. Further, the determination unit 55 determines a positional relationship between the communication terminal 4 and the data processing apparatus 3 and the positional relationship between the communication terminal 4 and the number search server 7 from position information of the communication terminal 4 and the position information of each of the data processing apparatus 3 and the number search server 7. In the present embodiment, the determination unit 55 functions as an example of determination means.

The authentication unit 56 is mainly implemented by processing of the CPU 501 illustrated in FIG. 4. The authentication unit 56 performs authentication of the communication terminal 4 using user identification information and a password corresponding to the user identification information transmitted by the communication terminal 4. In the present embodiment, the authentication unit 56 functions as an example of authentication means.

The generation unit 57 is mainly implemented by processing of the CPU 501 illustrated in FIG. 4. The generation unit 57 generates data relating to various guidance messages (notifications), a list of received documents, a screen image of a reply destination candidate, and a screen image of each error to be transmitted to the communication terminal 4 owned by a user. In addition, the generation unit 57 performs read processing of a transfer document at a time of receiving a viewing completion response of a received document. In the present embodiment, the generation unit 57 functions as an example of generation means.

The registration unit 58 is mainly implemented by processing of the CPU 501 illustrated in FIG. 4. The registration unit 58 registers, in the storing unit 5000, a telephone number, a facsimile number, and the like corresponding to a search candidate transmitted by the number search server 7. In the present embodiment, the registration unit 58 functions as an example of registration means.

The storing and reading unit 59 is mainly implemented by processing performed by the CPU 501 with respect to at least one of the ROM 502 and the HD 504 illustrated in FIG. 4. The storing and reading unit 59 stores various data (or information) in the storing unit 5000 and reads various data (or information) from the storing unit 5000. In the present embodiment, the storing and reading unit 59 functions as an example of storing and reading means.

### Functional Configuration of Number Search Server

As illustrated in FIG. 5, the number search server 7 includes a transmission and reception unit 71, a search unit 73, a determination unit 75, a providing unit 76, and a storing and reading unit 79. Each of the functional units is a function or means implemented by one or more of the hardware resources illustrated in FIG. 3. The one or more of the hardware resources operate in response to an instruction from the CPU 701 according to a program for the number search server 7 loaded from at least one of the ROM 702 and the HD 704 into the RAM 702b. The number search server 7 further includes a storing unit 7000 that is implemented by at least one of the ROM 702 and the HD 704 illustrated in FIG. 4. In the storing unit 7000, a data processing program to be executed by the number search server 7 is stored.

### Functional Unit of Number Search Server

A detailed description is now given of the functional units of the number search server 7 in detail. The transmission and reception unit 71 of the number search server 7 illustrated in FIG. 5 is mainly implemented by processing performed by the CPU 701 with respect to the external device I/F 708 and the network I/F 709 illustrated in FIG. 4. The transmission and reception unit 71 transmits and receives various data (or information) to and from the communication management apparatus 5 via the communication network 100. In the present embodiment, the transmission and reception unit 71 functions as an example of transmission means and reception means.

The search unit 73 is mainly implemented by processing of the CPU 701 illustrated in FIG. 4. The search unit 73 searches for reply destination information (a telephone number, a facsimile number, a company name, an address, and the like) of the communication apparatus 2 based on the CSID included in a number search request transmitted by the communication management apparatus 5. In the present embodiment, the search unit 73 functions as an example of search means.

The determination unit 75 is mainly implemented by processing of the CPU 701 illustrated in FIG. 4 and performs various determinations in the number search server 7. In the present embodiment, the determination unit 75 functions as an example of determination means.

The providing unit 76 is mainly implemented by processing of the CPU 701 illustrated in FIG. 4 and provides the communication management apparatus 5 with various types of information for an inquiry. In the present embodiment, the providing unit 76 functions as an example of providing means.

The storing and reading unit 79 is mainly implemented by processing performed by the CPU 701 with respect to at least one of the ROM 702 and the HD 704 illustrated in FIG. 4. The storing and reading unit 79 stores various data (or information) in the storing unit 7000 and reads various data (or information) from the storing unit 7000. In the present embodiment, the storing and reading unit 79 functions as an example of storing and reading means.

### Processing and Operation of Embodiment

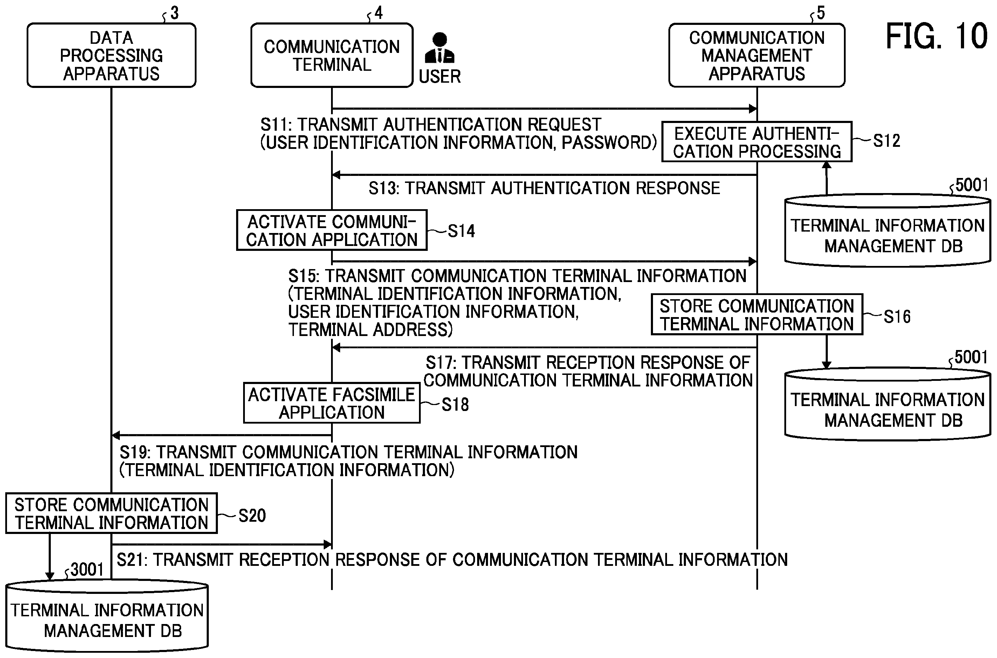

Referring now to FIGS. 10 to 21, a description is given of processing and operations performed by the communication system according to the first embodiment. In the first embodiment, a description is given of reply destination search processing that the communication terminal 4 and the communication management apparatus 5 perform via the number search server 7 when the data processing apparatus 3 transmits (returns) a facsimile document transmitted to the data processing apparatus 3 from the communication apparatus 2. FIG. 10 is a sequence chart illustrating an example of application activation processing according to the first embodiment.

### Authentication Processing of User and Communication Terminal

The transmission and reception unit 41 of the communication terminal 4 owned by a user transmits an authentication request to the communication management apparatus 5 in response to a login request by the user (S11). Accordingly, the transmission and reception unit 51 of the communication management apparatus 5 receives the authentication request transmitted by the communication terminal 4. The authentication request includes user identification information for identifying the user and a password.

The authentication unit 56 of the communication management apparatus 5 that has received the authentication request performs authentication processing of the user and the communication terminal 4 owned by the user, referring to the terminal information management DB 5001, using the received user identification information and password as search keys (see FIG. 7A) (S12). In the description of the present embodiment, it is assumed that the authentication requested by the user is successful.

After performing the authentication processing of the users and the communication terminal 4 owned by the user, the transmission and reception unit 51 transmits an authentication response indicating that the authentication is successful to the communication terminal 4 (S13). Accordingly, the transmission and reception unit 41 of the communication terminal 4 receives the authentication response transmitted by the communication management apparatus 5.

### Application Activation Processing

After performing login, the user of the communication terminal 4 performs an operation to activate a communication application that operates on the communication terminal 4. In response to the operation by the user, the application activating unit 43 activates the communication application installed in advance in the storing unit 4000 (S14).

Subsequently, the transmission and reception unit 41 transmits communication terminal information to the communication management apparatus 5 (S15). Accordingly, the transmission and reception unit 51 of the communication management apparatus 5 receives the communication terminal information transmitted by the communication terminal 4. The communication terminal information includes terminal identification information for identifying the communication terminal 4, user identification information, and a terminal address.

Subsequently, the storing and reading unit 59 stores and registers the received terminal identification information, the user identification information, and the terminal address in association with one another in the terminal information management DB 5001 (see FIG. 7A) (S16).

After storing and registering the communication terminal information, the transmission and reception unit 51 transmits a reception response of the communication terminal information to the communication terminal 4 (S17). Accordingly, the transmission and reception unit 41 of the communication terminal 4 receives the reception response of the communication terminal information transmitted by the communication management apparatus 5. Note that the processing of S17 performed by the communication management apparatus 5 may be omitted.

Further, the user of the communication terminal 4 performs an operation to activate a facsimile application that operates on the communication terminal 4. In response to the operation by the user, the application activating unit 43 activates the facsimile application installed in advance in the storing unit 4000 (S18).

Subsequently, the transmission and reception unit 41 transmits the communication terminal information to the data processing apparatus 3 (S19). Accordingly, the transmission and reception unit 31 of the data processing apparatus 3 receives the communication terminal information transmitted by the communication terminal 4. The communication terminal information includes the terminal identification information of the communication terminal 4.

Subsequently, the storing and reading unit 39 registers the received communication terminal information in the terminal information management DB 3001 (see FIG. 7A) (S20).

After registering the communication terminal information, the transmission and reception unit 31 transmits a reception response of the communication terminal information to the communication terminal 4 (S21). Accordingly, the transmission and reception unit 41 of the communication terminal 4 receives the reception response of the communication terminal information transmitted by the data processing apparatus 3. Note that the processing of S21 performed by the data processing apparatus 3 may be omitted. In addition, the login processing of S11 to S13 described above may be performed after either of the processing of S14 to S17 or the processing of S18 to S21.

In the communication system according to the present embodiment, for example, in performing the above-described processing of S11, S14, S15, and S17, another apparatus or the like may exist between the communication terminal 4 and the communication management apparatus 5. In other words, various types of information (data) transmitted and received between the communication terminal 4 and the communication management apparatus 5 may be transmitted and received via another apparatus. The above-described configuration and processing method may also be applied to other processing steps between the communication terminal 4 and the communication management apparatus 5.

Furthermore, in the communication system according to the present embodiment, for example, in performing the above-described processing of S19 and S21, another apparatus or the like may exist between the communication terminal 4 and the data processing apparatus 3. In other words, various types of information (data) transmitted and received between the communication terminal 4 and the data processing apparatus 3 may be transmitted and received via another apparatus. The above-described configuration and processing method may also be applied to other processing steps between the communication terminal 4 and the data processing apparatus 3.

### Data Transmission and Reception Processing

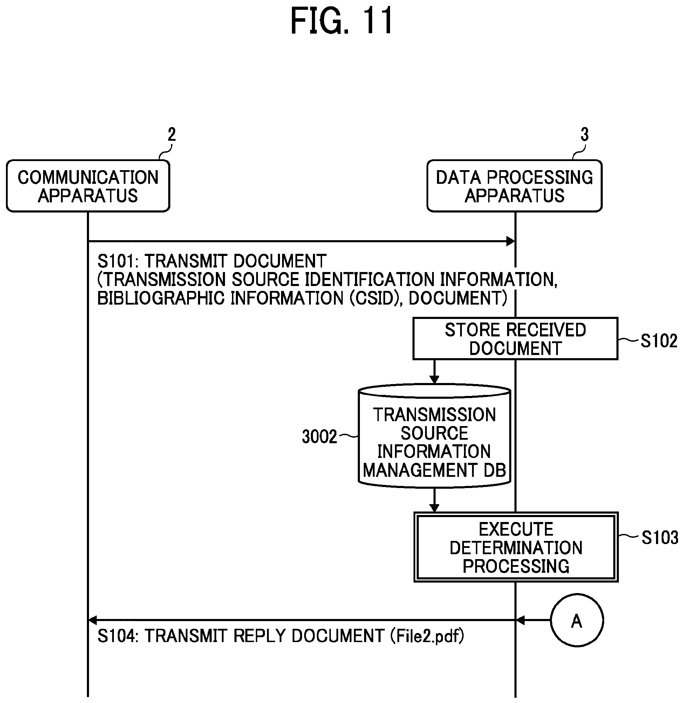

FIG. 11 is a sequence chart illustrating an example of data transmission and reception processing according to the first embodiment. Note that, in the embodiment, it is assumed that a certain communication protocol is established in advance for facsimile communication between the communication apparatus 2 and the data processing apparatus 3. In the communication apparatus 2, an operation screen relating to a facsimile communication function is displayed on the display 206 by the display control unit 24. In response to operations to select a destination and operate a transmission button for transmitting a facsimile document on the operation screen by an operator who operates the communication apparatus 2, the operation on the transmission button is received by the operation receiving unit 22. Thereafter, the scanner 216 reads a document and the generation unit 27 generates a document file corresponding to the read document. After a series of the above-described processing, the transmission and reception unit 21 transmits the document file generated by the generation unit 27 to the data processing apparatus 3 corresponding to a facsimile number selected from among destinations registered in the registration unit 26 (S101). Accordingly, the transmission and reception unit 31 of the data processing apparatus 3 receives a transmission document (the document file) transmitted by the communication apparatus 2. The transmission document includes transmission source identification information, bibliographic information including CSID and the like), and the document file itself. Note that, in the following description of the present embodiment, for the sake of convenience, a "received document file or facsimile document file" is referred to as a "received document" and a "transmitted document file or facsimile document file" is referred to as a "transmission document" or simply a "document."

After receiving a document transmitted by the communication apparatus 2, the storing and reading unit 39 stores the transmission source identification information, the bibliographic information (CSID and the like), a reception date and time, and a received document name included in the received document in the transmission source information management DB 3002 (see FIG. 7B) (S102).

### Determination Processing of Transmission Source Information

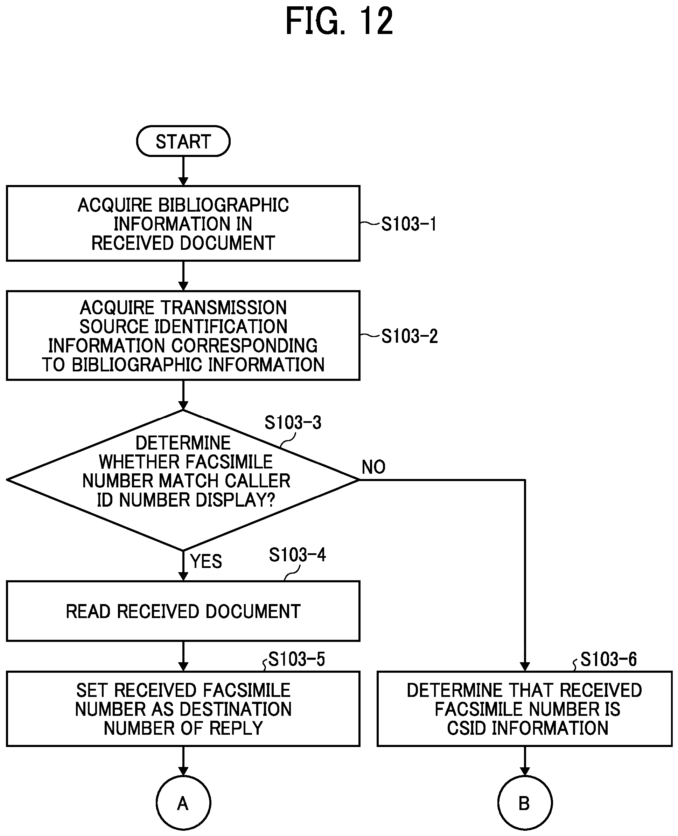

Subsequently, before transmitting the transmission source information to the communication management apparatus 5, the determination unit 35 determines whether the transmission source number (telephone number or facsimile number) included in the received bibliographic information transmitted from the transmission source communication apparatus 2 is CSID or caller ID display number (S103). FIG. 12 is a flowchart illustrating an example of determination processing of a transmission source information according to the first embodiment. The acquisition unit 33 acquires bibliographic information (e.g., CSID) in a received document (S103-1). Further, the acquisition unit 33 acquires, from the transmission source information management DB 3002. transmission source identification information corresponding to the acquired bibliographic information (S103-2).

Subsequently, in cooperation with the storing and reading unit 39, the determination unit 35 searches the transmission source information management DB 3002 using the received transmission source identification information as a search key (see FIG. 7B), to read the transmission source number (facsimile number) and the stored transmission source number type corresponding to the transmission source identification information. The determination unit 35 determines whether the stored transmission source number type indicates caller ID display (S103-3). When the stored transmission source number type indicates caller ID display, that is, the caller ID display number is stored as the transmission source number in the transmission source information management DB 3002 ("YES" in S 103-3), the storing and reading unit 39 reads a received document name corresponding to the transmission source identification information from the transmission source information management DB 3002 (see FIG. 7B) (S103-4). In the example illustrated in FIG. 7B, the received document name to be read in the processing of S103-4 is "File2.pdf" in the data item of the "RECEIVED DOCUMENT NAME" corresponding to "SID002" in the data item of the "TRANSMISSION SOURCE IDENTIFICATION INFORMATION."

Subsequently, the acquisition unit 33 sets the facsimile number in the received bibliographic information as a destination number at a time of reply, and transitions to a circle "A" to perform subsequent processing (S103-5).

On the other hand, when the stored transmission source number type does not indicate that the transmission source number is caller ID display ("NO" in S103-3), the determination unit 35 determines that the facsimile number in the received bibliographic information is the CSID, and transitions to a circle "B" to perform subsequent processing (S103-6).

Returning to FIG. 11, as the subsequent processing of S103-5, the transmission and reception unit 31 of the data processing apparatus 3 transmits (returns) a reply document (for example, File2.pdf) of the received document to the communication apparatus 2, specifying the transmission source number as a reply destination (S104). Accordingly, the transmission and reception unit 21 of the communication apparatus 2 receives a file of the File2.pdf transmitted by the data processing apparatus 3 as a reply document.

### Document Transfer Processing

### Loop Processing of Received Information Acquisition

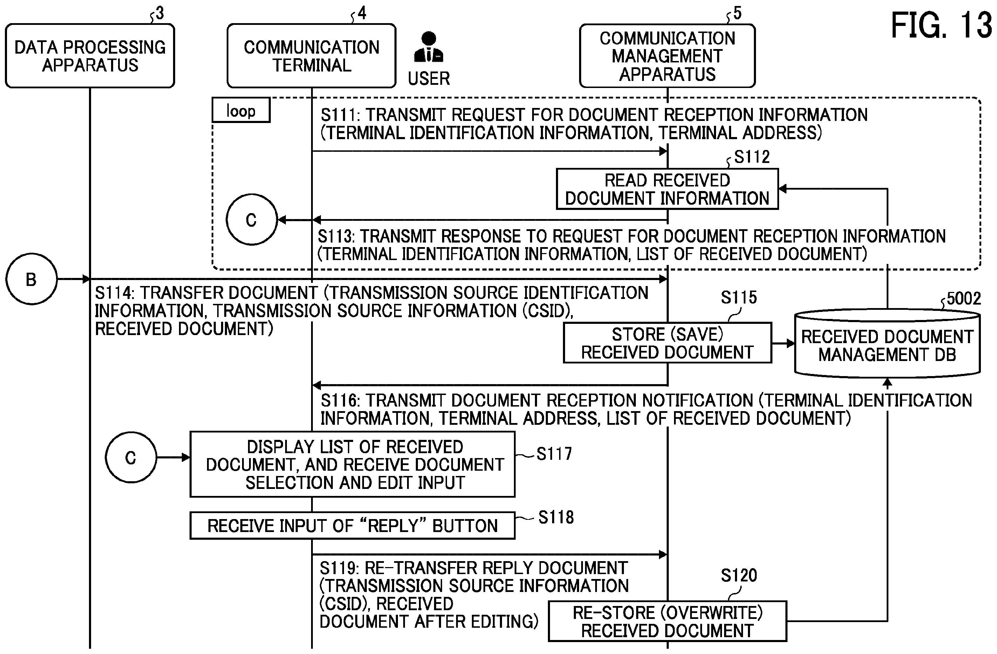

Subsequently, a description is given of loop processing of acquiring document reception information by the communication terminal 4 and document transfer processing to the communication terminal 4 by the data processing apparatus 3. FIG. 13 is a sequence chart illustrating an example of document information transmission and reception processing according to the first embodiment. Note that, in the embodiment, it is assumed that a certain communication protocol is established in advance for communication between the data processing apparatus 3 and the communication management apparatus 5. First, a description is given of loop processing of acquiring document reception information by the communication terminal 4. The transmission and reception unit 41 of the communication terminal 4 transmits a request for document reception information to the communication management apparatus 5 (S111). Accordingly, the transmission and reception unit 51 of the communication management apparatus 5 receives the request for the document reception information transmitted by the communication terminal 4. The request for the document reception information includes terminal identification information for identifying the communication terminal 4 and a terminal address.

In response to a reception of the request for the received document information, the storing and reading unit 59 of the communication management apparatus 5 searches the received document management DB 5002 using the received terminal identification information as a search key (see FIG. 8), to read a reception date and time and a received document name corresponding to the received terminal identification information (S112).

After reading the reception date and time and the received document name, the transmission and reception unit 51 transmits a response to the request for the document reception information to the communication terminal 4, and transitions to a circle "C" to perform subsequent processing (S113). Accordingly, the transmission and reception unit 41 of the communication terminal 4 receives the response to the request for the document reception information transmitted by the communication management apparatus 5. The response of the request for the document reception information includes the terminal identification information and a list of received documents. The list of received documents includes, and the document name of the received document and reception data and time of the received document.

The above-described processing of S111 to S113 may be loop processing that is repeatedly performed by the communication terminal 4 for the communication management apparatus 5 at a certain time interval.

Subsequently, as illustrated in FIG. 13, after the above-described processing of S103-6, the transmission and reception unit 31 of the data processing apparatus 3 transfers the received document to the communication management apparatus 5 (S114). Accordingly, the transmission and reception unit 51 of the communication management apparatus 5 receives the document transmitted by the data processing apparatus 3. The received document includes transmission source identification information, transmission source information (CSID), and the received document.

In response to a reception of the received document, the storing and reading unit 59 of the communication management apparatus 5 stores the received transmission source identification information and the received document in association with one another in the received document management DB 5002 (see FIG. 8) (S115).

Subsequently, the transmission and reception unit 51 of the communication management apparatus 5 transmits a document reception notification generated by the generation unit 57 to the communication terminal 4 (S116). Accordingly, the transmission and reception unit 41 of the communication terminal 4 receives the document reception notification transmitted by the communication management apparatus 5. The document reception notification includes the terminal identification information received in S19 and a list of received documents generated by the generation unit 57. In S116, in addition, the communication management apparatus 5 can send (transmit) a push notification of the above-described document reception notification to the communication terminal 4. Specifically, the communication management apparatus 5 uses, for example, Firebase Cloud Messaging (FCM) that is an example of a push notification server to send the push notification of the document reception notification to the communication terminal 4. Various notifications transmitted from the communication management apparatus 5 to the communication terminal 4 may be sent by push notification using the above-described FCM.

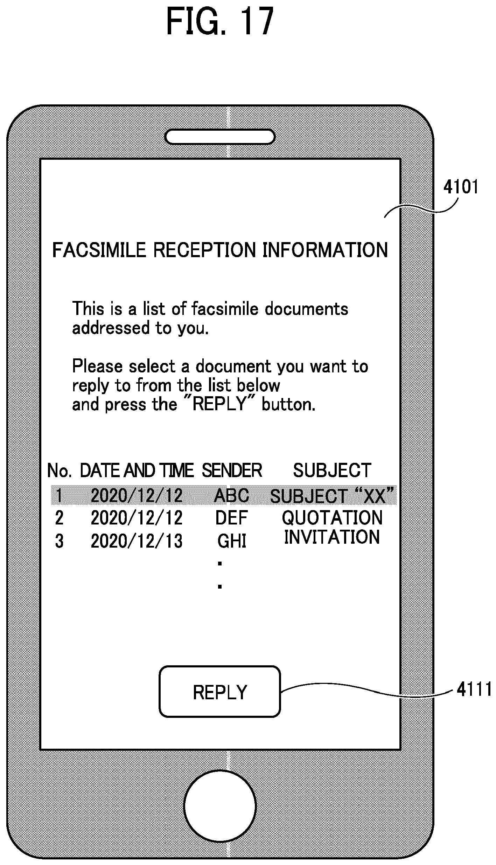

The display control unit 44 of the communication terminal 4 displays a document reception notification screen 4101 of FIG. 17 on the display 406 and receives operations of document selection and editing input operated by a user (S117).

### Examples of Display Screens

FIG. 17 is a view illustrating an example of a display screen of reception information according to the first embodiment. As illustrated in FIG. 17, in response to a reception of the document reception notification transmitted by the communication management apparatus 5, the display control unit 44 displays the document reception notification screen 4101 on the display 406. On the document reception notification screen 4101, for example, a title of "FACSIMILE RECEPTION INFORMATION," a predetermined message, and a list of received documents are displayed. The predetermined message indicates that a facsimile document has been received for the user. The list of received documents includes "No. (number)," "DATE AND TIME," "SENDER," and "SUBJECT" separately for each item. The predetermined message is, for example, determined by the user or a manufacturer. The item of the "SUBJECT" may be a subject of the received document stored in the communication management apparatus 5 using an optical character recognition (OCR) or the like for extracting. In addition, the document reception notification screen 4101 includes a "REPLY" button 4111 (hereinafter, referred to as a reply button 4111) for transmitting a document as a reply. Accordingly, after confirming a content displayed on the document reception notification screen 4101, the user operates (e.g., a press or a tap) the reply button 4111 to transition from this screen to another screen. Note that, in performing S117, the storing and reading unit 49 may store a certain received document selected from the list of the received documents and edited by the user in a certain area of the storing unit 4000.

Note that, when the content to be displayed exceeds a range of the document reception notification screen 4101, the display control unit 44 may provide a UI that displays a scroll bar in the document reception notification screen 4101 and allows the user to scroll to check a hidden display content. In addition, when the operation receiving unit 42 receives an operation performed by the user to select any item of the received document of "No. 1," the display control unit 44 displays the received document of "No. 1" to be distinguishable from the other received facsimile documents on the document reception notification screen 4101. To distinguish from the other received facsimile documents, the display control unit 44 displays a target document, for example, in hatching, in bold, with a surrounding rectangular frame, or the like.

Subsequently, when the operation receiving unit 42 receives an operation performed by the user on the reply button 4111 (S118), the transmission and reception unit 41 retransfers the reply document to the communication management apparatus 5 (S119). Accordingly, the transmission and reception unit 51 of the communication management apparatus 5 receives the reply document transmitted by the communication terminal 4. The reply document includes the transmission source information (CSID) and a received document (or a document added and edited by the user).

After receiving the reply document, the storing and reading unit 59 of the communication management apparatus 5 re-stores (overwrites) the received transmission source information and the received document in association with the transmission source identification information (see FIG. 8) in the received document management DB 5002 (S120).

In the communication system according to the present embodiment, for example, in performing the above-described processing of S114, another apparatus or the like may exist between the data processing apparatus 3 and the communication management apparatus 5. In other words, various types of information (data) transmitted and received between the data processing apparatus 3 and the communication management apparatus 5 may be transmitted and received via another apparatus. The above-described configuration and processing method may also be applied to other processing steps between the data processing apparatus 3 and the communication management apparatus 5.

### Number Search Processing

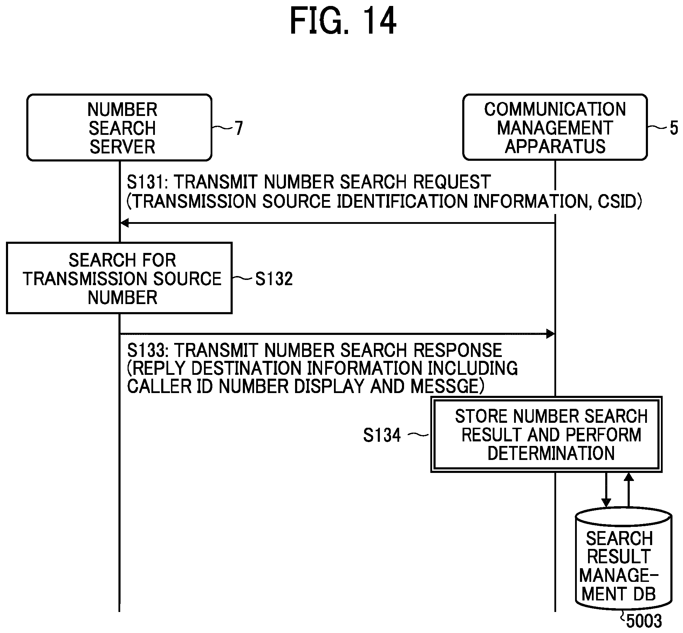

FIG. 14 is a sequence chart illustrating an example of number search processing according to the first embodiment. As illustrated in FIG. 14, after re-storing the received document, the transmission and reception unit 51 of the communication management apparatus 5 transmits a number search request to the number search server 7 (S131). Accordingly, the transmission and reception unit 71 of the number search server 7 receives the number search request transmitted by the communication management apparatus 5. The number search request includes the CSID.

In response to a reception of the number search request, the search unit 73 of the number search server 7 searches for the transmission source number corresponding to the CSID included in the number search request (S132).

After searching for the transmission source number, the transmission and reception unit 71 transmits the search result to the communication management apparatus 5 as a number search response (S133). Accordingly, the transmission and reception unit 51 of the communication management apparatus 5 receives the number search response transmitted by the number search server 7. The number search response includes reply destination information. The reply destination information includes at least either of a reply destination indicated by the communication apparatus 2 or a reply destination candidate, corresponding to the transmission source information. The reply destination information includes the number display information and the message. In the processing of S132 and S133, the determination unit 75 may determine the content of the message included in the number search response so as to correspond to the number search result. However, since the processing of S132 described above is executed by a number search service that is generally used, the present embodiment is not limited to the processing described above.

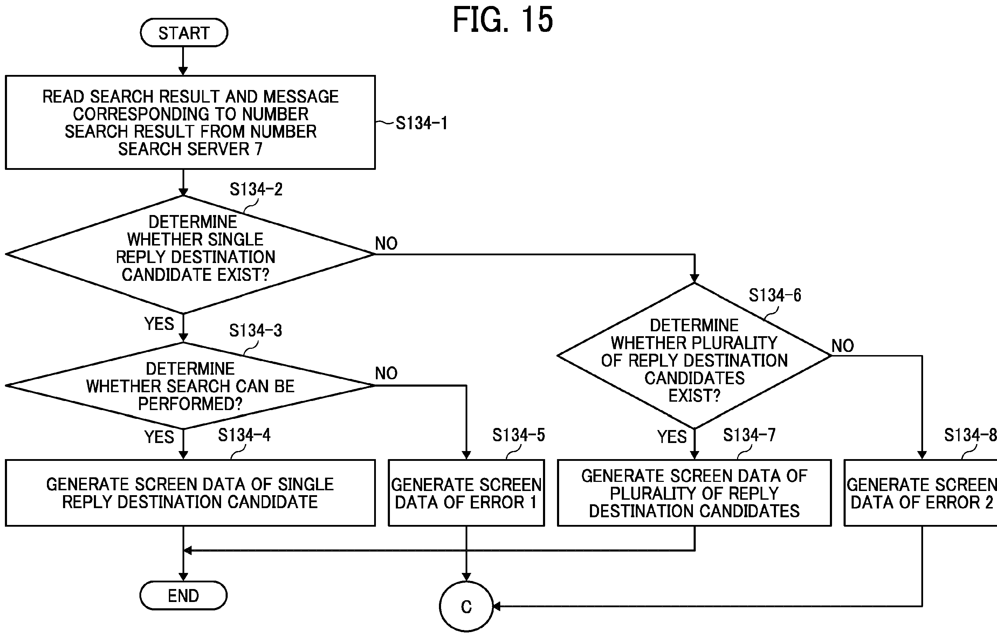

After receiving the number search response, the storing and reading unit 59 stores the received number search result in the search result management DB 5003 (see FIG. 9) in cooperation with the registration unit 58. Subsequently, the determination unit 55 performs each determination illustrated in FIG. 15 on the received number search result (S134).

In the communication system according to the present embodiment, for example, in performing the above-described processing of S131 and S133, another apparatus or the like may exist between the communication management apparatus 5 and the number search server 7. In other words, various types of information (data) transmitted and received between the communication management apparatus 5 and the number search server 7 may be transmitted and received via another apparatus. The above-described configuration and processing method may also be applied to other processing steps between the communication management apparatus 5 and the number search server 7.

### Determination Processing on Number Search Result

FIG. 15 is a flowchart illustrating an example of determination processing of a number search result according to the first embodiment.

The storing and reading unit 59 searches the search result management DB 5003 using the received transmission source identification information as a search key (see FIG. 9), to read a search result and the message corresponding to the number search result received from the number search server 7 (S134-1).

Subsequently, the determination unit 55 determines whether or not the number of the reply destination candidate is single from the read search result (S134-2). When the number of the reply destination candidate is single ("YES" in S134-2), the determination unit 55 further determines whether or not a search can be made (S134-3).

When the search can be made ("YES" in S134-3), the generation unit 57 generates screen data representing a reply destination candidate screen including the single candidate of the reply destination determined by the determination unit 55 and exits this flow (S134-4).

On the other hand, when the search cannot be made ("NO" in S134-3), the generation unit 57 generates screen data representing a screen of "error A" to be described later, and transitions to the circle "C" to perform subsequent processing (S134-5).

In the determination processing of S134-2, when the number of the reply destination candidate is not single ("NO" in S134-2), the determination unit 55 further determines whether or not the number of the candidate for the reply destination is two or more (S134-6). When the number of the reply destination candidate is two or more ("YES" in S134-6), the generation unit 57 generates screen data representing a reply destination candidate screen including the plurality of candidates for the reply destination determined by the determination unit 55 and exits this flow (S134-7).

On the other hand, when the number of the reply destination candidate is not single or more, that is, when the number of the candidate for the reply destination is zero ("NO" in S134-6), the generation unit 57 generates screen data representing a screen of "error B" to be described later, and transitions to the circle "C" to perform subsequent processing (S134-8).

### Notification Processing of Number Search Result

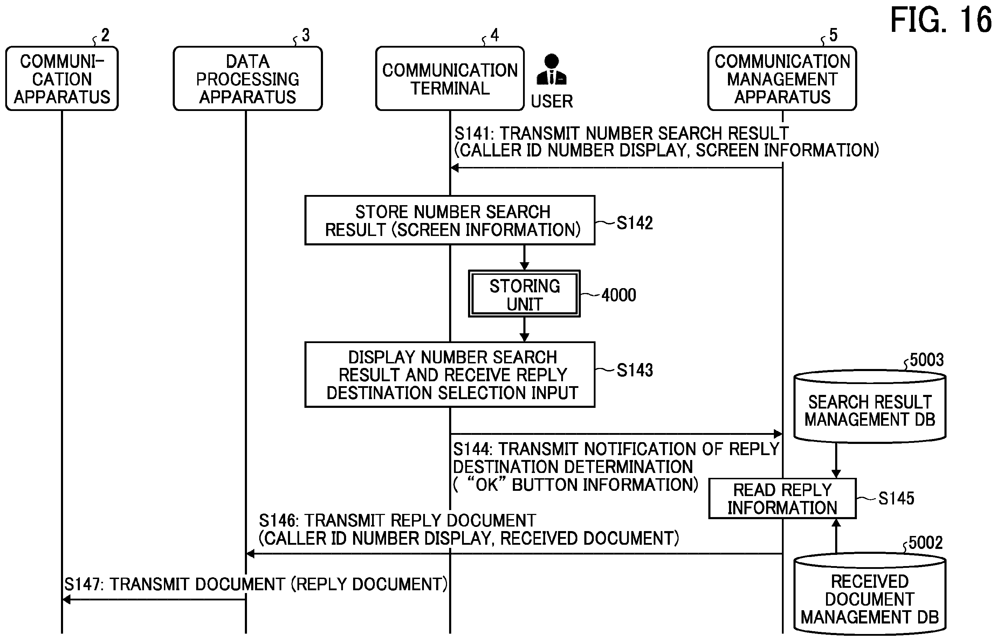

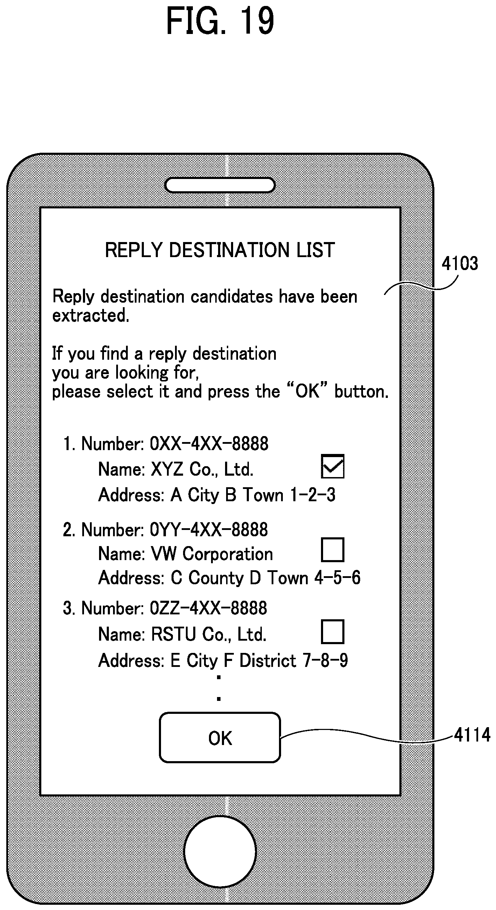

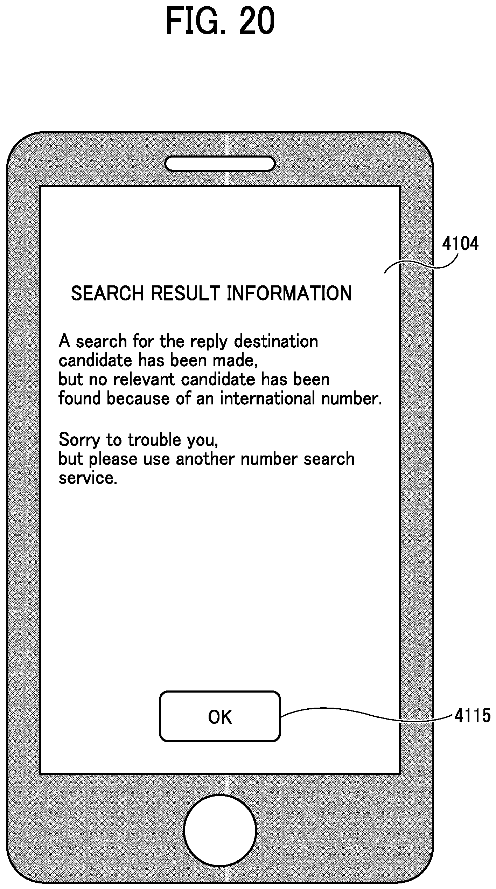

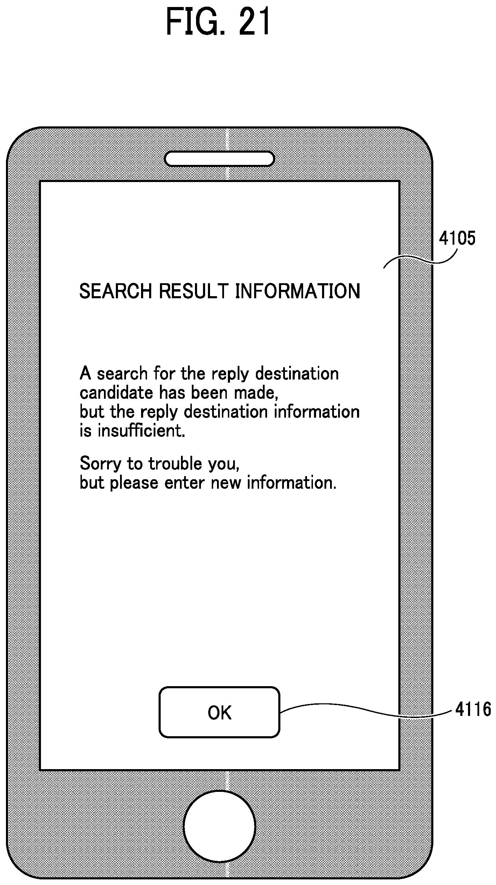

FIG. 16 is a sequence chart illustrating an example of notification processing of the number search result according to the first embodiment. As illustrated in FIG. 16, the generation unit 57 of the communication management apparatus 5 generates list information indicating the search result transmitted by the number search server 7. The transmission and reception unit 51 of the communication management apparatus 5 transmits the number search result to the communication terminal 4 (S141). Accordingly, the transmission and reception unit 41 of the communication terminal 4 receives the number search result. The number search result includes caller ID display number as list information and screen information. The caller ID display number is an example of the reply destination information. When the number search result includes a plurality of reply destination candidates as the reply destination information, the transmission and reception unit 51 transmits list information including a list of reply destination candidates to the communication terminal 4. As illustrated in FIG. 19, the list information enables the communication terminal 4 to display a screen that allows a user to select a desired reply destination from the list of reply destination candidates. On the other hand, when the number search result does not include any reply destination candidate as the reply destination information, the transmission and reception unit 51 transmits, to the communication terminal 4, notification information prompting the user to use another number search service as illustrated in FIG. 20 or notification information prompting the user to enter new information relating to the reply destination as illustrated in FIG. 21.

Subsequently, the storing and reading unit 49 of the communication terminal 4 stores the received number search result and data of the screen information in a certain area of the storing unit 4000 (S142).

Thereafter, the display control unit 44 displays the number search result on the display 406 and receives a reply destination selection input selected by the user (S143).

### Examples of Display Screens

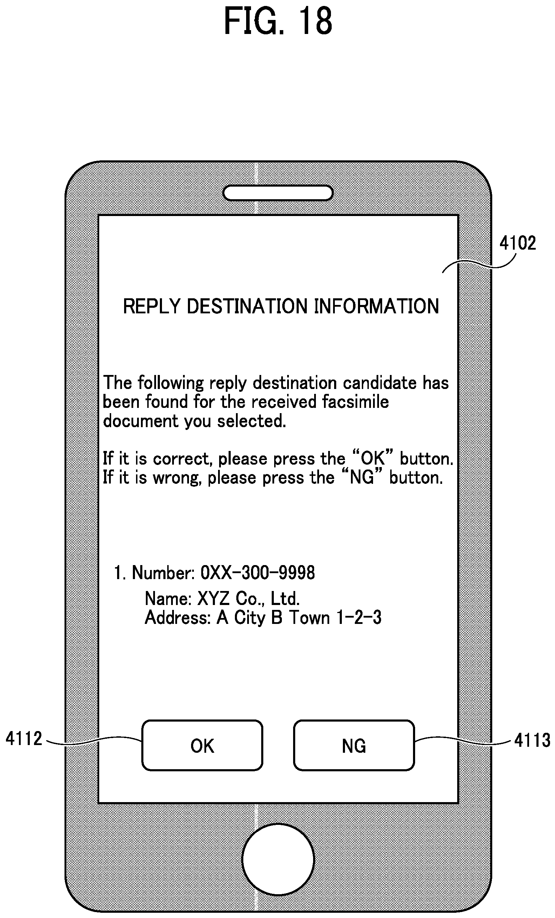

FIG. 18 is a view illustrating an example of a screen displaying reply destination information according to the first embodiment. FIG. 19 is a view illustrating an example of another screen displaying reply destination information according to the first embodiment. As illustrated in FIG. 18, in response to a reception of the number search result transmitted by the communication management apparatus 5, the display control unit 44 displays a document reception notification screen 4102 on the display 406. On the document reception notification screen 4102, for example, a title of "REPLY DESTINATION INFORMATION," a predetermined message, and a reply destination candidate are displayed. The predetermined message indicates that a reply destination candidate for the received facsimile document has been found. The predetermined message is, for example, determined by the user or a manufacturer. In addition, the document reception notification screen 4102 includes an "OK" button (hereinafter, referred to as an OK button) 4112 and an "NG" button (hereinafter, referred to as an NG button) 4113 that are selectively operated by the user. Accordingly, after confirming the reply destination candidate displayed on the document reception notification screen 4102, the user can transition from this screen to another screen by operating the OK button 4112 or the NG button 4113. In this case, when the user operates the OK button 4112, processing in and after S144 described later is executed.

### Processing in Case where NG Button is Operated

On the other hand, the user may operate the NG button 4113. In this case, the candidate retrieved as the reply destination is not the reply destination desired by the user. Therefore, the operation receiving unit 42 and the display control unit 44 may return to the processing of S117 (processing after the circle "C") to be executed after generating the error screen, receive an input of the reply button again, and repeat the processing of the number search. Further, when the NG button 4113 is operated, the display control unit 44 may display, on the display 406, a message screen that prompts the user to directly input a reply destination and transmit a facsimile document as a reply.

### Processing in Case of Plural Reply Destination Candidates

### Examples of Display Screens

On the other hand, as illustrated in FIG. 19, in response to a reception of the number search result transmitted by the communication management apparatus 5, the display control unit 44 displays a document reception notification screen 4103 on the display 406. On the document reception notification screen 4103, for example, a title of "REPLY DESTINATION LIST," a predetermined message, and a plurality of reply destination candidates are displayed. The predetermined message indicates that a plurality of reply destination candidates for the received facsimile document has been found. The predetermined message is, for example, determined by a user or a manufacturer. In this case, for example, the plurality of reply destination candidates having the same last seven digits (or the same last four digits) of a plurality of searched facsimile numbers are displayed from the area code in a list. In addition, the document reception notification screen 4103 includes an "OK" button (hereinafter, referred to as an OK button) 4114 that is selectively operated by the user. Accordingly, after selecting a desired reply destination from among the plurality of reply destination candidates, the user can transition from this screen to another screen by operating the OK button 4114.

In the example of the document reception notification screen 4103, for receiving selecting of a candidate of a desired reply destination, the display control unit 44 provides a UI for ticking a check box disposed next to each of the plurality of reply destination candidates. Note that the method for receiving the selecting is not limited to the example of the check box, and the display control unit 44 may provide a UI for selecting a desired reply destination by a method illustrated in FIG.17.

Returning to FIG. 16, the transmission and reception unit 41 of the communication terminal 4 transmits a notification of reply destination determination to the communication management apparatus 5 (S144). Accordingly, the transmission and reception unit 51 of the communication management apparatus 5 receives the notification of reply destination determination transmitted by the communication terminal 4. The notification of reply destination determination includes each piece of instruction corresponding to each of an "OK" button (hereinafter referred to as an OK button) 4112 and an "NG" button (hereinafter referred to as an NG button) 4113 displayed on the document reception notification screen 4102 illustrated in FIG. 18.

After receiving the notification of reply destination determination (instruction corresponding to the OK button 4112), the storing and reading unit 59 of the communication management apparatus 5 searches the search result management DB 5003 (see FIG. 9) using the transmission source identification information stored after reception as a search key, to read the caller ID display number and the message indicated by the corresponding search result. Further, the storing and reading unit 59 searches the received document management DB 5002 (see FIG. 8) using the transmission source identification information as a search key, to read the received document indicated by the corresponding received document name (S145).

Thereafter, the transmission and reception unit 51 transmits a reply document to the data processing apparatus 3 (S146). Accordingly, the transmission and reception unit 31 of the data processing apparatus 3 receives the reply document transmitted by the communication management apparatus 5. The reply document includes caller ID display number and a received document to be transmitted to the communication apparatus 2 as a reply.

After receiving the reply document, the transmission and reception unit 31 transmits the document to the communication apparatus 2 (S147). Accordingly, the transmission and reception unit 21 of the communication apparatus 2 receives the reply document transmitted by the data processing apparatus 3.

### Error Notification Processing

### Examples of Display Screens

FIG. 20 is a view illustrating an example of a screen displaying a failure of a reply destination search according to the first embodiment. FIG. 21 is a view illustrating an example of another screen displaying a failure of a reply destination search according to the first embodiment. By the above-described processing of S134-5, a document reception notification screen 4104, which is an example of the screen of "error A" illustrated in FIG. 20, is displayed on the display 406 of the communication terminal 4. On the document reception notification screen 4104, for example, a title of "SEARCH RESULT INFORMATION" and a message are displayed. The message indicates that the search cannot be made beyond a searchable range since the number of the reply destination is an international facsimile number and prompts a user to use another number search service. In addition, the document reception notification screen 4104 includes an "OK" button (hereinafter referred to as an OK button) 4115. Accordingly, after confirming the message, the user can transition from this screen to another screen by operating the OK button 4115.

Further, by the above-described processing of S134-8, a document reception notification screen 4105, which is an example of the screen of "error B" illustrated in FIG. 21, is displayed on the display 406 of the communication terminal 4. On the document reception notification screen 4105, for example, a title of "SEARCH RESULT INFORMATION" and a message are displayed. The message indicates that the search cannot be made since the reply destination information is insufficient (unknown) and prompts a user to input new information for performing the search. In addition, the document reception notification screen 4105 includes an "OK" button (hereinafter referred to as an OK button) 4116. Accordingly, after confirming the message, the user can transition from this screen to another screen by operating the OK button 4116.

Further, when either of the OK button 4115 illustrated in FIG. 20 or the OK button 4116 illustrated in FIG. 21 is operated, the operation receiving unit 42 and the display control unit 44 may return to the processing of step S117 (processing after the circle C), receive an input of the reply button 4111 again, and then perform the number search using another function.

As described above, in the communication management system 6 according to the first embodiment, the transmission and reception unit 51 of the communication management apparatus 5 receives the CSID included in the transmission source information transmitted by the data processing apparatus 3 and the user identification information transmitted by the communication terminal 4 (S114). Further, the transmission and reception unit 51 transmits the caller ID display number as the reply destination information corresponding to the transmission source information and the screen information to the communication terminal 4 authenticated by the user identification information (S141). As a result, the reply destination information when returning to the transmission source is provided as accurate information. In particular, even when the CSID included in the transmission document transmitted from the communication apparatus 2 to the data processing apparatus 3 is manually input by a user or a different number is intentionally set, the communication management system 6 provides the reply destination information for returning to the communication apparatus 2 to the communication terminal 4 as accurate information. Therefore, a facsimile number of reply destination as reply destination information set from the communication terminal 4 to the data processing apparatus 3 is accurately designated and a problem that a received facsimile document is erroneously transmitted to an erroneous reply destination is prevented.

### Second Embodiment

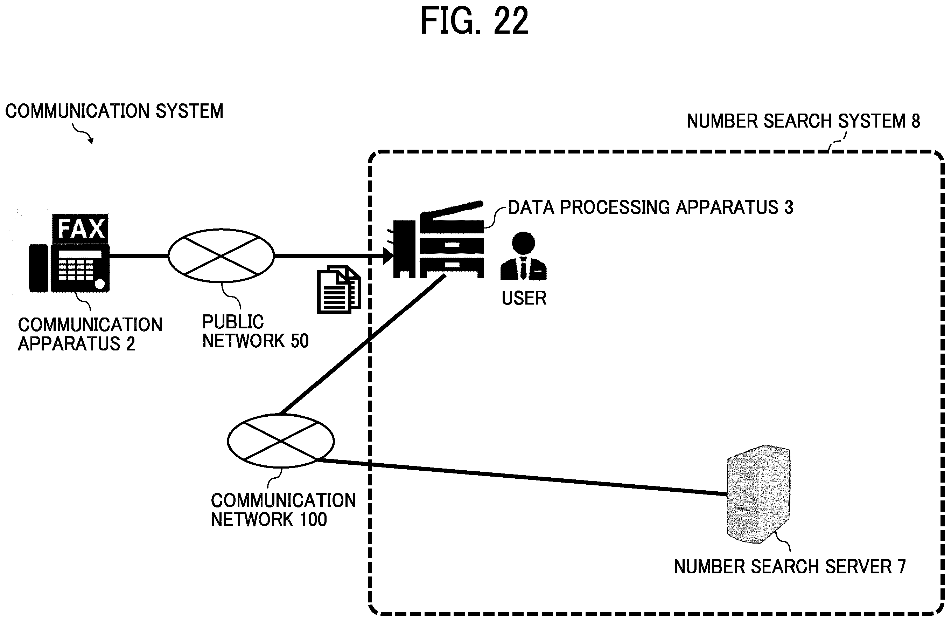

Referring now to FIGS. 22 to 25, a description is given of a second embodiment of the present disclosure. In the second embodiment, a description is given of processing in which a user operates an operation unit (e.g., a control panel) of the data processing apparatus 3 (e.g., MFP) to transmit a document transmitted by the communication apparatus 2 as a reply to the communication apparatus 2. FIG. 22 is a diagram illustrating an example of an overall configuration of a communication system according to a second embodiment of the present disclosure. The difference from the first embodiment is that the data processing apparatus 3 and the number search server 7 together function as a number search system 8 in the communication system. Accordingly, the communication system according to the second embodiment does not include the communication terminal 4 and the communication management apparatus 5 included in the communication system according to the first embodiment. Note that since the communication system according to the second embodiment has substantially the same apparatus configuration, hardware configurations, and functional configurations as the communication system according to the first embodiment, redundant description thereof is omitted here.

### Functional Configuration of Communication System

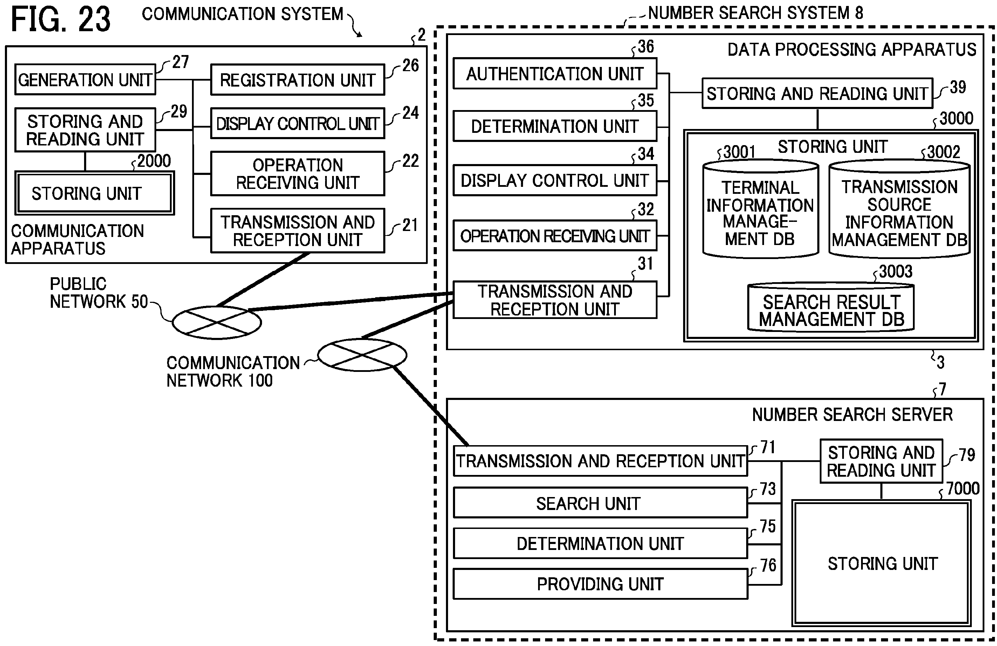

Referring now to FIGS. 23, a description is given of a functional configuration of the second embodiment. FIG. 23 is a block diagram illustrating an example of a functional configuration of the communication system according to the second embodiment. Note that since the communication system according to the second embodiment is substantially the same in functional configuration as the communication system according to the first embodiment except for a part of the data processing apparatus 3 described below, and therefore description thereof is omitted here.

### Functional Configuration of Data Processing Apparatus

As illustrated in FIG. 23, the data processing apparatus 3 of the communication system according to the second embodiment additionally includes a search result management DB 3003 in the storing unit 3000.

### Search Result Management Table

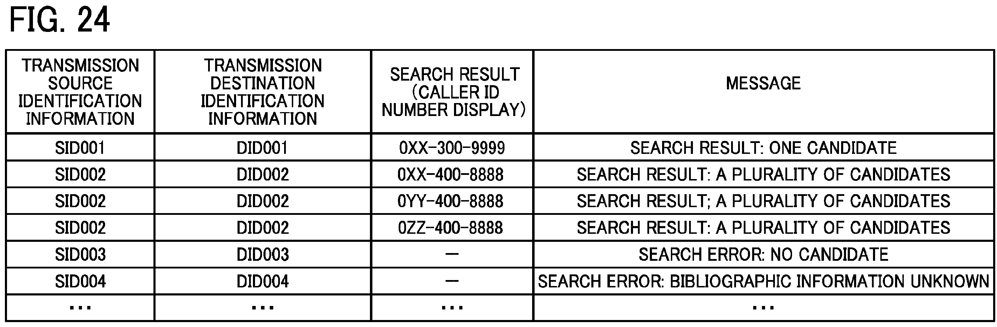

FIG. 24 conceptually illustrates an example of a search result management table according to the second embodiment. In the search result management table, transmission destination identification information, a search result (caller ID display number), and a message are stored for each piece of transmission source identification information. The search result includes caller ID display number that is a search result obtained from the number search server 7. The message is predetermined message corresponding to the search result when the number search server 7 performs a search, and includes the number of search results, success or failure of the search, and the like.

### Functional Unit of Data Processing Apparatus

Since a configuration of each functional unit of the data processing apparatus is substantially the same as the contents described in the first embodiment, description thereof is omitted similar to functional configurations of the other apparatuses.

### Document Transfer Processing

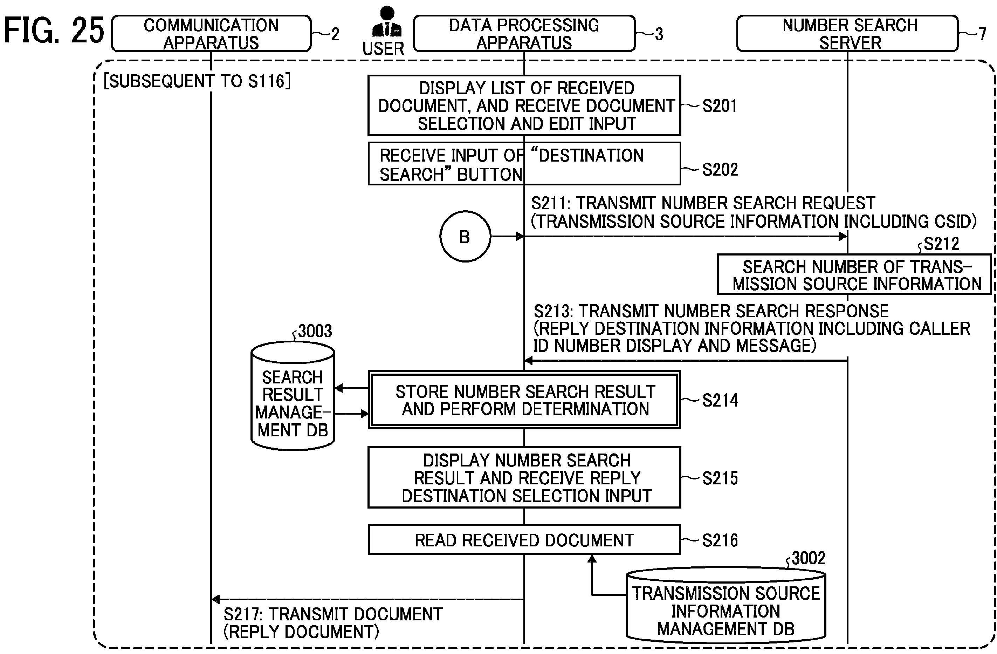

In the second embodiment, since the communication terminal 4 is not provided, the processing from S11 to S18 relating to the application activation processing of the first embodiment is omitted, and the data transmission and reception processing from S101 to S104 is similarly performed. Thereafter, the processing illustrated in FIG. 25 is performed through the processing from S111 to S113 described above. Note that, in the second embodiment, it is assumed that a certain communication protocol is established in advance for communication between the data processing apparatus 3 and the number search server 7.

The display control unit 34 of the data processing apparatus 3 displays a screen corresponding to FIG. 17 on the panel display 340a of the control panel 340 and receives document selection and editing input by a user (S201).

Subsequently, the operation receiving unit 32 receives an operation on a certain button (for example, a "destination search" button operated at a time of facsimile transmission) by the user (S202). In response to the operation, the transmission and reception unit 31 transmits a number search request to the number search server 7 that searches information corresponding to transmission source information (S211). Accordingly, the transmission and reception unit 71 of the number search server 7 receives the number search request transmitted by the data processing apparatus 3. The number search request includes, for example, the transmission source information (CSID).

After receiving the number search request, the number search server 7 performs a number search of the transmission source information (S212). The transmission and reception unit 71 transmits a search result to the data processing apparatus 3 as a number search response (S213). Accordingly, the transmission and reception unit 31 of the data processing apparatus 3 receives the number search response transmitted by the number search server 7. The number search response includes reply destination information. The reply destination information includes at least either of a reply destination indicated by the communication apparatus 2, or a reply destination candidate, corresponding to the transmission source information. The reply destination information includes caller ID display number and a message.

After receiving the number search response, the storing and reading unit 39 of the data processing apparatus 3 registers the number search result corresponding to the received transmission source identification information in the search result management DB 3003 (see FIG. 24). The determination unit 35 of the data processing apparatus 3 performs a determination similar to the determination processing of the number search result described in S134 (S214). The details of the determination processing performed in S214 have already been described and description thereof is omitted.

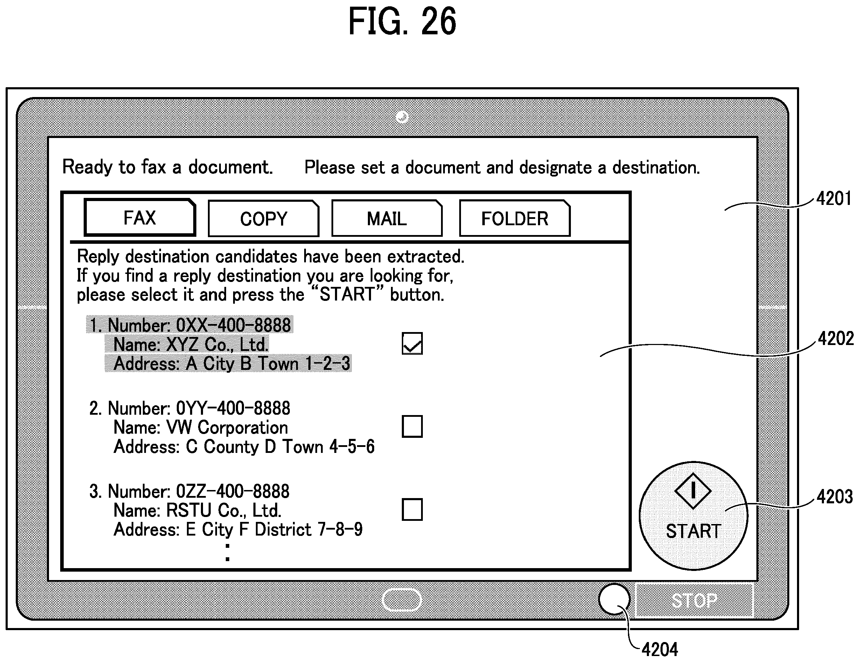

Thereafter, the display control unit 34 displays a document reception notification screen 4201 as the search result illustrated in FIG. 26 on the panel display 340a. The operation receiving unit 32 receives a reply destination selected by a user and an input of a "START" button 4203 (hereinafter, referred to as a start button) (S215).

After receiving the reply destination selection input and the input of the start button 4203, the storing and reading unit 39 searches the transmission source information management DB 3002 using, as a search key, the CSID included in the bibliographic information (stored after receiving the facsimile document) corresponding to the number of the selected reply destination (see FIG. 7B), to read the received document indicated by the corresponding received document name (S216).

Thereafter, the transmission and reception unit 31 transmits the received document to the communication apparatus 2 as a reply (S217). Accordingly, the transmission and reception unit 21 of the communication apparatus 2 receives the reply document transmitted by the data processing apparatus 3.

### Display Processing of A Plurality of Reply Destination Candidates

### Examples of Display Screens

FIG. 26 is a view illustrating an example of a screen displaying reply destination information according to the second embodiment. As illustrated in FIG. 26, in response to a reception of the number search result transmitted by the number search server 7, the display control unit 34 of the data processing apparatus 3 displays the document reception notification screen 4201 on the panel display 340a of the control panel 340. In the document reception notification screen 4201, for example, following a display of message "Ready to fax a document. Please set a document and designate a destination.," a function display area 4202 including a tab of a "FAX" function is displayed. Substantially the same contents as the contents illustrated in FIG. 17 are displayed in the tab of the "FAX" function of the function display area 4202. For example, a predetermined message indicating that a plurality of reply destination candidates has been found for the received document and the plurality of reply destination candidates are displayed. In this case, for example, the plurality of reply destination candidates having the same last seven digits (or the same last four digits) of a plurality of searched facsimile numbers are displayed from the area code in a list. In addition, the document reception notification screen 4201 includes the start button 4203 and a "STOP" button (hereinafter, referred to as a stop button) 4204 that are selectively operated by a user. Accordingly, after selecting a desired reply destination from the plurality of reply destination candidates, the user can transition from this screen to another screen and transmit a reply document to the communication apparatus 2 that is a reply destination by operating the start button 4203.

In the example of the document reception notification screen 4201, for receiving selecting of a candidate of a desired reply destination, the display control unit 34 provides a UI for ticking a check box disposed next to each of the plurality of reply destination candidates. Then, a ticked reply destination candidate is displayed in a different display appearance from the other reply destination candidates by being hatched in gray or the like as illustrated in FIG. 26. Note the UI is not limited to the example of the check box, and a UI for selecting a desired reply destination by a method illustrated in FIG. 17 may be provided. Note that, when none of the plurality of reply destination candidates displayed in the function display area 4202 is a reply destination candidate desired by the user, the display control unit 34 may transition from the document reception notification screen 4201 to another screen without transmitting the facsimile document after receiving an operation of the stop button 4204 by the user. For example, the display control unit 34 may provide a UI that allows the user to search an address book, select, and determine a reply destination.

Note that the screen display example illustrated in FIG. 26 is an example. As described in the first embodiment, the display control unit 34 can display a screen of contents corresponding to each search result on the panel display 340a of the control panel 340 of the data processing apparatus 3, including a case where a single reply destination candidate is found and a case where no reply destination candidate is found.

As described above, according to the second embodiment, when the operation receiving unit 32 of the data processing apparatus 3 receives an operation on the reply button 4111 (S202) by a user, the transmission and reception unit 71 receives a search result transmitted by the number search server 7, i.e., a number search response (S213). The number search response includes reply destination information. The reply destination information includes at least either of a reply destination indicated by the communication apparatus 2, or a reply destination candidate, corresponding to the transmission source information. Thereafter, in response to the number search result determined in accordance with the received search result, the operation receiving unit 32 receives a reply destination selection input by the user (S215). Then, the storing and reading unit 39 reads a received document and the read received document is transmitted to the communication apparatus 2 as a reply document (S217). Accordingly, in addition to the advantage achieved by the first embodiment, the communication system according to the second embodiment allows the user to transmit the received document to a desired reply destination as a reply simply by using the control panel 340 of the data processing apparatus 3. Thus, the configuration of the communication system according to the second embodiment saves the operations for replying using the communication terminal 4 owned by a user. Further, this configuration obviates use of the communication management apparatus 5.

### Variation of Second Embodiment

A variation of the second embodiment is described below. In the variation of the second embodiment, a description is given of processing in which a user operates the communication terminal 4 owned by the user in a certain network in which the data processing apparatus 3 is installed and transmits a transmission document transmitted by a communication apparatus 2 as a reply to the communication apparatus 2. The data processing apparatus 3 and the communication terminal 4 exist in a single local area network (LAN) via a firewall 105. That is, a difference from the second embodiment is that the device operated by a user is changed from the data processing apparatus 3 to the communication terminal 4. FIG. 27 is a diagram illustrating an example of a general arrangement of a communication system according to a variation of the second embodiment. As illustrated in FIG. 27, the communication system includes a communication apparatus 2, a data processing apparatus 3, a communication terminal 4, and a number search server 7. The data processing apparatus 3, the communication terminal 4, and the number search server 7 together function as a number search terminal system 9 as a part of the communication system.

Note that since the communication system according to the variation of the second embodiment is substantially the same in apparatus configuration, hardware configurations, and functional configurations as the communication system according to the second embodiment, description thereof is omitted here. Further, various types of processing performed by the communication terminal 4 in response to an operation performed by a user is the same as the various types of processing performed on the control panel 340 of the data processing apparatus 3 in the second embodiment, and a description thereof is omitted.

### Number Search Processing by Communication Terminal

According to the variation of the second embodiment, the communication terminal 4 owned by a user is used at a relatively short distance from the data processing the data processing apparatus 3. For example, the communication terminal 4 performs various settings, button operations, and the like on the data processing apparatus 3 through communication with the data processing apparatus 3 using a short-range wireless communication technology in compliance with such as the NFC, BLUETOOTH, Wi-Fi, or the like. Furthermore, the communication terminal 4 can acquire desired reply destination information by communicating with the number search server 7 connected to the communication network 100 via the firewall 105.

As described above, according to the variation of the second embodiment, in addition to the advantage achieved by the second embodiment, the communication system allows the user to transmit the received document as a reply using the communication terminal 4 owned by the user. Accordingly, the transmission processing of a document as a reply does not necessarily use the data processing apparatus 3 that receives the document. For example, a task relating to document reception can be performed without limiting a location within an area where an in-house LAN environment is established.

Each of the functions of the embodiments described above may be implemented by one or more processing circuits or circuitry. Here, the "processing circuit or circuitry" in the present disclosure includes a programmed processor to execute each function by software, such as a processor implemented by an electronic circuit and a device. The device refers to, for example, a processor and an application specific integrated circuit (ASIC), a digital signal processor (DSP), a field programmable gate array (FPGA), a system on a chip (SOC), a graphics processing unit (GPU), and conventional circuit components arranged to perform the recited functions.

Further, the texts obtained by the OCR processing and various tables in the above-described embodiments may be generated by machine learning. In addition, in alternative to using the OCR or the tables, the data of each related item may be classified by the machine learning. In the present disclosure, the machine learning is defined as a technology that makes a computer to acquire human-like learning ability. In addition, the machine learning refers to a technology in which a computer autonomously generates an algorithm required for determination such as data identification from learning data loaded in advance and applies the generated algorithm to new data to make a prediction. Any suitable learning method is applied for machine learning, for example, any one of supervised learning, unsupervised learning, semi-supervised learning, reinforcement learning, and deep learning, or a combination of two or more those learning.

Although the communication management system, the communication management apparatus, the communication management method, the data processing apparatus, and the program according to embodiments of the present disclosure have been described above, the above-described embodiments are illustrative and do not limit the present disclosure. Thus, numerous additional modifications and variations are possible in light of the above teachings. For example, elements and/or features of different illustrative embodiments may be combined with each other and/or substituted for each other within the scope of the present invention. Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or 3G-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A communication management system (6) comprising:
a data processing apparatus (3) configured to receive and process data transmitted by a communication apparatus (2);
a communication management apparatus (5) configured to communicate with the data processing apparatus (3) and manage the data received by the data processing apparatus (3); and
a communication terminal (4) configured to communicate with the data processing apparatus (3) and the communication management apparatus (5), wherein:
the data processing apparatus (3) includes a reception means (31) configured to receive the data transmitted by the communication apparatus (2) and a transmission means (31) configured to transmit transmission source information of the communication apparatus (2) included in the received data to the communication management apparatus (5); and
the communication management apparatus (5) includes a reception means (51) configured to receive the transmission source information transmitted by the data processing apparatus (3) and user identification information transmitted by the communication terminal (4) for identifying a user who uses the communication terminal (4), and a transmission means (51) configured to transmit reply destination information corresponding to the transmission source information to the communication terminal (4) authenticated by the user identification information received by the reception means (51), **characterized in that**:
the reception means (51) of the communication management apparatus (5) receives the reply destination information transmitted by a search server (7), the search server (7) storing the reply destination information corresponding to the transmission source information;
the transmission means (51) of the communication management apparatus (5) transmits list information including the received reply destination information to the communication terminal (4), and
in a case where the reply destination information transmitted by the search server (7) includes a plurality of reply destination candidates, the transmission means (51) of the communication management apparatus (5) transmits the list information including the plurality of reply destination candidates to the communication terminal (4) for display, the list information allowing the user to select a desired reply destination among the plurality of reply destination candidates.

2. The communication management system according to claim 1, wherein
in a case where the reply destination information transmitted by the search server (7) does not include any reply destination candidate, the transmission means of the communication management apparatus (5) transmits a notification to the communication terminal (4) for display, the notification prompting the user to enter new information relating to a reply destination.

3. The communication management system according to claim 1 or claim 2, wherein
the communication management apparatus (5) further includes a generation means (57) configured to generate the list information according to a search result searched by the search server (7).

4. The communication management system according to one of claims 1 to 3, wherein
the data processing apparatus (3) further includes a determination means (35) configured to determine whether the transmission source information matches particular number information stored in the data processing apparatus (3) before transmitting the transmission source information to the communication management apparatus (5), and in a case where the determination means (35) determines that the transmission source information matches particular number information, the transmission means of the data processing apparatus transmits the received data to the communication apparatus (2) using the transmission source information as a reply destination.

5. The communication management system according to any one of claims 1 to 4, wherein
the transmission source information transmitted from the data processing apparatus (3) to the communication management apparatus (5) includes a called subscriber identification of facsimile communication transmitted from the communication apparatus (2) to the data processing apparatus (3).

6. A communication management method executed by a communication management apparatus (5), the communication management apparatus managing transmission source information of a communication apparatus (2) transmitted by the communication apparatus (2) to a data processing apparatus (3), the communication management method comprising:
receiving (S114), by reception means (51), the transmission source information transmitted by the data processing apparatus (3);
receiving (S111), by the reception means (51), user identification information transmitted by a communication terminal (4), the user identification information for identifying a user who uses the communication terminal (4), the communication terminal (4) communicating with the data processing apparatus (3) and the communication management apparatus (5);
receiving (S134), by the reception means (51) of the communication management apparatus (5), reply destination information transmitted by a search server (7), the search server (7) storing the reply destination information corresponding to the transmission source information; and
transmitting (S116), by transmission means (51), the reply destination information to the communication terminal (4) authenticated by the user identification information received from the communication terminal (4), wherein the method further comprises:
wherein transmitting (S116) the reply destination information to the communication terminal (4) further comprises transmitting (S141), by the transmission means (51) of the communication management apparatus (5), list information including the received reply destination information to the communication terminal (4), and
in a case where the reply destination information transmitted by the search server (7) includes a plurality of reply destination candidates, transmitting (S141) by the transmission means (51) of the communication management apparatus (5) the list information including the plurality of reply destination candidates to the communication terminal (4) for display, the list information allowing the user to select a desired reply destination among the plurality of reply destination candidates.

7. A carrier medium carrying computer readable code that, when executed by a computer, make said computer
to perform the communication management method of claim 6.

## Patentansprüche

1. Kommunikationsverwaltungssystem (6), umfassend:
eine Datenverarbeitungseinrichtung (3), welche dazu konfiguriert ist, Daten zu empfangen und zu verarbeiten, welche von einer Kommunikationseinrichtung (2) übertragen werden;
eine Kommunikationsverwaltungseinrichtung (5), welche dazu konfiguriert ist, mit der Datenverarbeitungseinrichtung (3) zu kommunizieren und die von der Datenverarbeitungseinrichtung (3) empfangenen Daten zu verwalten; und
ein Kommunikationsendgerät (4), welches dazu konfiguriert ist, mit der Datenverarbeitungseinrichtung (3) und der Kommunikationsverwaltungseinrichtung (5) zu kommunizieren, wobei:
die Datenverarbeitungseinrichtung (3) ein Empfangsmittel (31), welches dazu konfiguriert ist, die von der Kommunikationseinrichtung (2) übertragenen Daten zu empfangen, und ein Übertragungsmittel (31) beinhaltet, welches dazu konfiguriert ist, in den empfangenen Daten beinhaltete Übertragungsquelleninformationen der Kommunikationseinrichtung (2) an die Kommunikationsverwaltungseinrichtung (5) zu übertragen; und
die Kommunikationsverwaltungseinrichtung (5) ein Empfangsmittel (51), welches dazu konfiguriert ist, die durch die Datenverarbeitungseinrichtung (3) übertragenen Übertragungsquelleninformationen und durch das Kommunikationsendgerät (4) übertragene Benutzeridentifikationsinformationen zum Identifizieren eines Benutzers, welcher das Kommunikationsendgerät (4) verwendet, zu empfangen, und ein Übertragungsmittel (51) beinhaltet, welches dazu konfiguriert ist, den Übertragungsquelleninformationen entsprechende Antwortzielinformationen an das Kommunikationsendgerät (4) zu übertragen, welches durch die von dem Empfangsmittel (51) empfangenen Benutzeridentifikationsinformationen authentifiziert ist, **dadurch gekennzeichnet, dass**:
das Empfangsmittel (51) der Kommunikationsverwaltungseinrichtung (5) die von einem Suchserver (7) übertragenen Antwortzielinformationen empfängt, wobei der Suchserver (7) die den Übertragungsquelleninformationen entsprechenden Antwortzielinformationen speichert;
die Übertragungsmittel (51) der Kommunikationsverwaltungseinrichtung (5) Listeninformationen überträgt, welche die empfangenen Antwortzielinformationen an das Kommunikationsendgerät (4) beinhalten, und
in einem Fall, in dem die von dem Suchserver (7) übertragenen Antwortzielinformationen eine Vielzahl von Antwortzielkandidaten beinhalten, das Übertragungsmittel (51) der Kommunikationsverwaltungseinrichtung (5) die Listeninformationen, welche die Vielzahl von Antwortzielkandidaten beinhalten, zur Anzeige an das Kommunikationsendgerät (4) überträgt, wobei die Listeninformationen dem Benutzer erlauben, ein gewünschtes Antwortziel aus der Vielzahl der Antwortzielkandidaten auszuwählen.

2. Kommunikationsverwaltungssystem nach Anspruch 1, wobei
in einem Fall, in dem die von dem Suchserver (7) übertragenen Antwortzielinformationen keinen Antwortzielkandidaten beinhalten, das Übertragungsmittel der Kommunikationsverwaltungseinrichtung (5) eine Benachrichtigung zur Anzeige an das Kommunikationsendgerät (4) überträgt, wobei die Benachrichtigung den Benutzer auffordert, neue Informationen in Bezug auf ein Antwortziel einzugeben.

3. Kommunikationsverwaltungssystem nach Anspruch 1 oder Anspruch 2, wobei
die Kommunikationsverwaltungseinrichtung (5) weiter ein Generierungsmittel (57) beinhaltet, welches dazu konfiguriert ist, die Listeninformationen gemäß einem von dem Suchserver (7) gesuchten Suchergebnis zu generieren.

4. Kommunikationsverwaltungssystem nach einem der Ansprüche 1 bis 3, wobei
die Datenverarbeitungseinrichtung (3) weiter ein Bestimmungsmittel (35) beinhaltet, welches dazu konfiguriert ist, zu bestimmen, ob die Übertragungsquelleninformationen mit bestimmten in der Datenverarbeitungseinrichtung (3) gespeicherten Nummerninformationen übereinstimmen, bevor die Übertragungsquelleninformationen an die Kommunikationsverwaltungseinrichtung (5) übertragen werden, und in einem Fall, in welchem das Bestimmungsmittel (35) bestimmt, dass die Übertragungsquelleninformationen mit bestimmten Nummerninformationen übereinstimmen, das Übertragungsmittel der Datenverarbeitungseinrichtung die empfangenen Daten unter Verwendung der Übertragungsquelleninformationen als ein Antwortziel an die Kommunikationseinrichtung (2) überträgt.

5. Kommunikationsverwaltungssystem nach einem der Ansprüche 1 bis 4, wobei
die von der Datenverarbeitungseinrichtung (3) an die Kommunikationsverwaltungseinrichtung (5) übertragenen Übertragungsquelleninformationen eine aufgerufene Teilnehmerkennung von Faxkommunikation beinhalten, welche von der Kommunikationseinrichtung (2) an die Datenverarbeitungseinrichtung (3) übertragen wird.

6. Kommunikationsverwaltungsverfahren, welches von einer Kommunikationsverwaltungseinrichtung (5) ausgeführt wird, wobei die Kommunikationsverwaltungseinrichtung die von der Kommunikationseinrichtung (2) an eine Datenverarbeitungseinrichtung (3) übertragenen Übertragungsquelleninformationen einer Kommunikationseinrichtung (2) verwaltet, wobei das Kommunikationsverwaltungsverfahren umfasst:
Empfangen (S114) der von der Datenverarbeitungseinrichtung (3) übertragenen Übertragungsquelleninformationen durch Empfangsmittel (51);
Empfangen (S111) von Benutzeridentifikationsinformationen, welche von einem Kommunikationsendgerät (4) übertragen werden, durch das Kommunikationsendgerät (4), wobei die Benutzeridentifikationsinformationen, einen Benutzer, welcher das Kommunikationsendgerät (4) verwendet, durch das Empfangsmittel (51), welches mit der Datenverarbeitungseinrichtung (3) kommuniziert, und die Kommunikationsverwaltungseinrichtung (5) identifizieren;
Empfangen (S134) von Antwortzielinformationen, welche von einem Suchserver (7) übertragen wurden, durch das Empfangsmittel (51) der Kommunikationsverwaltungseinrichtung (5), wobei der Suchserver (7) die den Übertragungsquelleninformationen entsprechenden Antwortzielinformationen speichert;
Übertragen (S116) der Antwortzielinformationen an das Kommunikationsendgerät (4), welches durch die von dem Kommunikationsendgerät (4) empfangenen Benutzeridentifikationsinformationen authentifiziert ist, durch Übertragungsmittel (51), wobei das Verfahren weiter umfasst:
wobei Übertragen (S116) der Antwortzielinformationen an das Kommunikationsendgerät (4) weiter Übertragen (S141) von Listeninformationen, welche die empfangenen Antwortzielinformationen an das Kommunikationsendgerät (4) beinhalten, durch die Übertragungsmittel (51) der Kommunikationsverwaltungseinrichtung (5) umfasst, und
in einem Fall, in dem die von dem Suchserver (7) übertragenen Antwortzielinformationen eine Vielzahl von Antwortzielkandidaten beinhalten, Übertragen (S141) von Listeninformationen, welche die Vielzahl von Antwortzielkandidaten beinhalten, zur Anzeige an das Kommunikationsendgerät (4) durch das Übertragungsmittel (51) der Kommunikationsverwaltungseinrichtung (5), wobei die Listeninformationen dem Benutzer erlauben, ein gewünschtes Antwortziel aus der Vielzahl der Antwortzielkandidaten auszuwählen.

7. Trägermedium, welches einen computerlesbaren Code beinhaltet, welcher, wenn er von einem Computer ausgeführt wird, den Computer veranlasst, das Kommunikationsverwaltungsverfahren nach Anspruch 6 durchzuführen.

## Revendications

1. Système de gestion de communications (6) comprenant :
un appareil de traitement de données (3) configuré pour recevoir et traiter des données transmises par un appareil de communication (2) ;
un appareil de gestion de communications (5) configuré pour communiquer avec l'appareil de traitement de données (3) et gérer les données reçues par l'appareil de traitement de données (3) ; et
un terminal de communication (4) configuré pour communiquer avec l'appareil de traitement de données (3) et l'appareil de gestion de communications (5), dans lequel :
l'appareil de traitement de données (3) inclut un moyen de réception (31) configuré pour recevoir les données transmises par l'appareil de communication (2) et un moyen de transmission (31) configuré pour transmettre des informations de source de transmission de l'appareil de communication (2) incluses dans les données reçues à l'appareil de gestion de communications (5) ; et
l'appareil de gestion de communications (5) inclut un moyen de réception (51) configuré pour recevoir les informations de source de transmission transmises par l'appareil de traitement de données (3) et des informations d'identification d'utilisateur transmises par le terminal de communication (4) pour identifier un utilisateur qui utilise le terminal de communication (4), ainsi qu'un moyen de transmission (51) configuré pour transmettre au terminal de communication (4) des informations de destination de réponse correspondant aux informations de source de transmission, authentifiées par les informations d'identification d'utilisateur reçues par le moyen de réception (51), **caractérisé en ce que** :
le moyen de réception (51) de l'appareil de gestion de communications (5) reçoit les informations de destination de réponse transmises par un serveur de recherche (7), le serveur de recherche (7) stockant les informations de destination de réponse correspondant aux informations de source de transmission ;
le moyen de transmission (51) de l'appareil de gestion de communications (5) transmet au terminal de communication (4) des informations de liste incluant les informations de destination de réponse reçue, et
dans un cas où les informations de destination de réponse transmises par le serveur de recherche (7) incluent une pluralité de candidats de destination de réponse, le moyen de transmission (51) de l'appareil de gestion de communications (5) transmet les informations de liste incluant la pluralité de candidats de destination de réponse au terminal de communication (4) pour affichage, les informations de liste permettant à l'utilisateur de sélectionner une destination de réponse souhaitée parmi la pluralité de candidats de destination de réponse.

2. Système de gestion de communications selon la revendication 1, dans lequel
dans un cas où les informations de destination de réponse transmises par le serveur de recherche (7) n'incluent aucun candidat de destination de réponse, le moyen de transmission de l'appareil de gestion de communications (5) transmet une notification au terminal de communication (4) pour affichage, la notification invitant l'utilisateur à saisir de nouvelles informations relatives à une destination de réponse.

3. Système de gestion de communications selon la revendication 1 ou la revendication 2, dans lequel
l'appareil de gestion de communications (5) inclut en outre un moyen de génération (57) configuré pour générer les informations de liste selon un résultat de recherche effectué par le serveur de recherche (7).

4. Système de gestion de communications selon l'une des revendications 1 à 3, dans lequel
l'appareil de traitement de données (3) inclut en outre un moyen de détermination (35) configuré pour déterminer si les informations de source de transmission correspondent à des informations numériques particulières stockées dans l'appareil de traitement de données (3) avant de transmettre les informations de source de transmission à l'appareil de gestion de communications (5) et, dans le cas où le moyen de détermination (35) détermine que les informations de source de transmission correspondent à des informations numériques particulières, le moyen de transmission de l'appareil de traitement de données transmet les données reçues à l'appareil de communication (2) en utilisant les informations de source de transmission comme destination de réponse.

5. Système de gestion de communications selon l'une quelconque des revendications 1 à 4, dans lequel
les informations de source de transmission transmises de l'appareil de traitement de données (3) à l'appareil de gestion de communications (5) incluent une identification d'abonné appelé de communication par télécopie transmise de l'appareil de communication (2) à l'appareil de traitement de données (3).

6. Procédé de gestion de communications mis en œuvre par un appareil de gestion de communications (5), l'appareil de gestion de communications gérant des informations de source de transmission d'un appareil de communication (2) transmises par l'appareil de communication (2) à un appareil de traitement de données (3), le procédé de gestion de communications comprenant :
la réception (S114), par un moyen de réception (51), des informations de source de transmission transmises par l'appareil de traitement de données (3) ;
la réception (S111), par le moyen de réception (51), d'informations d'identification d'utilisateur transmises par un terminal de communication (4), les informations d'identification d'utilisateur permettant d'identifier un utilisateur qui utilise le terminal de communication (4), le terminal de communication (4) communiquant avec l'appareil de traitement de données (3) et l'appareil de gestion de communications (5) ;
la réception (S134), par le moyen de réception (51) de l'appareil de gestion de communications (5), d'informations de destination de réponse transmises par un serveur de recherche (7), le serveur de recherche (7) stockant les informations de destination de réponse correspondant aux informations de source de transmission ; et
la transmission (S116), par le moyen de transmission (51), des informations de destination de réponse au terminal de communication (4) authentifiées par les informations d'identification d'utilisateur reçues du terminal de communication (4), dans lequel le procédé comprend en outre :
dans lequel la transmission (S116) des informations de destination de réponse au terminal de communication (4) comprend en outre la transmission (S141), par le moyen de transmission (51) de l'appareil de gestion de communications (5), d'informations de liste incluant les informations de destination de réponse reçues au terminal de communication (4), et
dans un cas où les informations de destination de réponse transmises par le serveur de recherche (7) incluent une pluralité de candidats de destination de réponse, la transmission (S141) par le moyen de transmission (51) de l'appareil de gestion de communications (5) des informations de liste incluant la pluralité de candidats de destination de réponse au terminal de communication (4) pour affichage, les informations de liste permettant à l'utilisateur de sélectionner une destination de réponse souhaitée parmi la pluralité de candidats de destination de réponse.

7. Support porteur portant un code lisible par ordinateur qui, lorsqu'il est exécuté par un ordinateur, amène ledit ordinateur à mettre en œuvre le procédé de gestion de communications selon la revendication 6.
